(19) **Europäisches Patentamt / European Patent Office / Office européen des brevets**

(11) **EP 1 668 886 B1**

(12) **EUROPEAN PATENT SPECIFICATION**

(45) Date of publication and mention
of the grant of the patent:
**10.12.2008 Bulletin 2008/50**

(21) Application number: **04765121.1**

(22) Date of filing: **13.09.2004**

(51) Int Cl.:
**H04N 1/409** (2006.01)     **H04N 5/217** (2006.01)

(86) International application number:
**PCT/EP2004/010199**

(87) International publication number:
**WO 2005/041558 (06.05.2005 Gazette 2005/18)**

(54) **STATISTICAL SELF-CALIBRATING DETECTION AND REMOVAL OF BLEMISHES IN DIGITAL IMAGES**

STATISTISCHE SELBSTKALIBRIERENDE ERKENNUNG UND ENTFERNUNG VON FLECKEN IN DIGITALEN BILDERN

DETECTION STATISTIQUE A AUTO-ETALONNAGE ET ELIMINATION D'IMPERFECTIONS DANS DES IMAGES NUMERIQUES

(84) Designated Contracting States:
**AT BE BG CH CY CZ DE DK EE ES FI FR GB GR HU IE IT LI LU MC NL PL PT RO SE SI SK TR**

(30) Priority: **30.09.2003  US 676823**
**30.09.2003  US 677134**
**30.09.2003  US 677139**

(43) Date of publication of application:
**14.06.2006  Bulletin 2006/24**

(73) Proprietor: **Fotonation Vision Limited**
**Dangan, Galway (IE)**

(72) Inventors:
• **STEINBERG, Eran**
**San Francisco, CA 94127 (US)**
• **PRILUTSKY, Yury**
**San Mateo, CA 94404 (US)**
• **CORCORAN, Peter**
**Galway (IE)**
• **BIGIOI, Petronel**
**County Galway (IE)**

• **ZAMFIR, Adrian**
**Bucuresti (RO)**
• **BUZULOIU, Vasile**
**Bucuresti (RO)**
• **URSU, Danutz**
**Bucuresti (RO)**
• **ZAMFIR, Marta**
**Bucuresti (RO)**

(74) Representative: **Boyce, Conor et al**
**F.R. Kelly & Co,**
**27 Clyde Road**
**Ballsbridge,**
**Dublin 4 (IE)**

(56) References cited:
**US-A- 6 035 072          US-A1- 2002 093 577**
**US-A1- 2003 039 402**

• **PATENT ABSTRACTS OF JAPAN vol. 2000, no. 05, 14 September 2000 (2000-09-14) & JP 2000 050062 A (MINOLTA CO LTD), 18 February 2000 (2000-02-18) & US 6 792 161 B1 (HASHIMOTO KEISUKE ET AL) 14 September 2004 (2004-09-14)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

**1. Field of the Invention**

This invention related to digital photography and in particular, automated means of removing blemish artifacts from images captured and digitized on a digital process.

**2. Description of the Related Art**

Many problems are caused by dust in particular and blemishes in general on imaging devices in general and digital imaging devices in particular. In the past, two distinct forms of image processing included providing means to detect and locate dust, scratches or similar defects and providing means to remedy the distortions caused by the defects to an image. It is desired to have an advantageous system can automatically detect and correct for the effects of dust, scratches and other optical blemishes.

Dust has been a problem in scanning devices for a long time. Various aspects of the scanning process, enhanced by image processing techniques where appropriate, have been employed to provide means for the detection of dust or defects relating to document or image/film scanners. These devices form an image by moving a ID sensor pixel array across a document platen, or in some cases, the document platen, with document/image is moved under the sensor array. The physics and implementation of these devices differ significantly from those of a field-based sensor or camera-style device. It is desired particularly to have dust and/or blemish detection and correction techniques for field-based or camera-style acquisition devices.

Image correction has been studied in relation to display devices, output apparatuses such as printers, and digital sensors. Image correction of dust artifacts can be used to recreate missing data, also referred to as in-painting or restoration, or undoing degradation of data, which still remains in the image, also referred to as image enhancement. It is desired to have a system including a digital camera and an external device or apparatus that can facilitate defect detection and/or correction involving sophisticated and automated computerized programming techniques.

US 2002/0093577, Kitawaki et al discloses a method of automatically correcting dust artifact regions within images according to the pre-characterizing portion of claim 1.

However, in Kitawaki, a separate dust map is employed for each combination of extracted parameters relating to the optical system when said images were acquired. As such, information about dust within the optical system for one set of parameters cannot be used to correct an image acquired with another set of parameters.

SUMMARY OF THE INVENTION

The present invention provides a method of automatically correcting dust artifact regions within images acquired by a system including a digital acquisition device characterised according to claim 1. Preferred embodiments include acquiring multiple original digital images with the digital acquisition device. Probabilities that certain pixels correspond to dust artifact regions within the images are determined based at least in part on a comparison of suspected dust artifact regions within two or more of the images. Probable dust artifact regions are associated with one or more values of one or more extracted parameters relating to the lens assembly of the digital acquisition device when the images were acquired. A statistical dust map is formed including mapped dust regions based on the dust artifact determining and associating. Pixels corresponding to correlated dust artifact regions are corrected within further digitally-acquired images based on the associated statistical dust map.

The dust artifact probabilities may be determined by statistically combining multiple individual probabilities based on each of the regions within two or more images. Probabilities may alternatively be determined that certain pixels within the image correspond to regions free of dust based at least in part on a comparison of suspected dust artifact regions within one or more of images. Certain suspected dust artifact regions may be eliminated based on probabilities that certain pixels correspond to regions free of dust, and/or as having a determined probability below a first threshold value that the suspected region is in fact dust artifact.

Certain further dust artifact regions may be judged as having a probability above the threshold value, such as to be subject to further probability determining including comparison with further acquired images prior to judging whether each further dust artifact region will be subject to the eliminating operation. There may be only a single threshold such that above the threshold, the suspected region will be judged to be subject to a dust correction operation, or a second threshold above the first threshold may be applied for that purpose, and there may be further thresholds defined within the software.

The probability determining operation may include weighting suspected dust artifact regions according to one or more predetermined probability weighting assessment conditions. These conditions may include size, shape, brightness or opacity, feathering, or peripheral smoothness of said suspected dust artifact regions, or a degree of similarity in size, shape, brightness, opacity or location with one or more suspected dust artifact regions in one or more other images, or combinations thereof.

The one or more extracted parameters may include aperture size, F-number, magnification, lens type, focal length of the digital acquisition device, or combinations thereof. The one or more extracted parameters may be calculated empirically from comparison of one or more dust artifact regions within multiple original digital images with the digital acquisition device.

The further digitally-acquired images may include different images than the originally acquired images, and may further include one or more of the same original images. The different images may be acquired with different values of one or more extracted parameters, they may be acquired of a different object or objects or of a different scene or scenes.

The determining and associating operations may be repeated for the further digitally-acquired images, and the statistical dust map including mapped dust regions may be updated based on the additional dust artifact determining and associating. The determining and associating may also be repeated for additional images acquired with the digital camera, and the statistical dust map including the mapped dust regions may be updated based on the additional dust artifact determining and associating. Pixels may be corrected corresponding to correlated dust artifact regions within the additional images based on the updated, associated statistical dust map. One or more of the further and original images may be updated based on the updating of the associated statistical dust map. The updating for the further and original images may be limited to updates that do not include appearance of new dust or movement of existing dust, and/or to updates that include previously determined dust artifact regions.

A version description may be created of changes in the statistical dust map. One or more of the further and original images may be updated based on the updating of the associated statistical dust map based on the version description. The version may be based on a chronological time stamp, and/or replacement of a lens. Version information may include a change of probability in the statistical dust map that certain pixels correspond to dust artifact regions. The version information may include one or more parameters including a change in dust location, change in dust position, appearance of a new dust region, and/or a disappearance of an existing dust region. A determination may be made as to whether a dust map is to be replaced based on determining that sufficient disparity exists based on an amount and/or quality of changes in the statistical dust map.

The image correction method may be automatically performed within a digital camera that includes an optical system, a sensor array, processing electronics and a memory. The image correction method may also be performed at least in part within an external processing device that couples with a digital camera that includes the optical system and the sensor array to form a digital image acquisition and processing system that also includes the processing electronics and the memory. The programming instructions may be stored on a memory within the external device which performs the image correction method. The digital acquisition device may capture images from film images, and the digital acquisition device may include a digital camera.

The dust artifact probability determining may include dynamically updating the probabilities based on comparisons with suspected equivalent dust artifact regions within the further digitally-acquired images. The determining of probabilities is further based on a pixel analysis of the suspected dust artifact regions in view of predetermined characteristics indicative of the presence of a dust artifact region. The dust artifact probability determining may include determining probabilities that certain pixels correspond to dust artifact regions within acquired images based at least in part on a comparison of suspected dust artifact regions within two or more digitally-acquired images, or on a pixel analysis of the suspected dust artifact regions in view of predetermined characteristics indicative of the presence of a dust artifact region, or both.

The probability determining may further include statistically combining probabilities based on comparisons of inner or shadow regions and of aura regions. The probability determining with respect to a shadow region of a dust artifact may be based on an extracted parameter-dependent shadow region analysis, wherein the shadow region analysis presumes that certain regions on a sensor of the digital image acquisition device are fully obscured by the dust. The probability determining with respect to an aura region of the dust artifact may be based on an extracted parameter-dependent aura region analysis, wherein the aura region analysis presumes that certain regions on a sensor of the digital image acquisition device are partially obscured by the dust. The aura region analysis may include calculating effects of differences in values of the one or more extracted parameters in different images of dust artifact illumination, shape, position, reflection or transmission properties, distance of dust to the sensor, aperture, exit pupil, or focal length, or combinations thereof. The different images may be acquired with different values of the one or more extracted parameters, and the different images may be acquired of different objects.

The method may further include validating whether a further digitally-acquired image has non-contradicting data that the probability that certain pixels correspond to dust artifact regions within the image prior to correcting pixels corresponding to correlated dust artifact regions within the images based on the associated statistical dust map. The user may be instructed to create a new dust map if the validating determines a noticeable change in the dust map. The shadow region analysis may include calculating effects of differences in values of the one or more extracted parameters in different images on dust artifact illumination, shape, position, reflection or transmission properties, distance of dust to the sensor, aperture, exit pupil, or focal length, or combinations thereof.

Suspected dust artifact regions of the further digitally images may include inner or shadow regions and aura regions. Focal length extracted parameters may be calculated empirically from comparison of the transposition of inner or shadow regions of dust artifact regions within multiple original digital images acquired with the digital acquisition device. Aperture extracted parameters may be calculated empirically from comparison of fall off of aura regions of the dust artifact regions within the multiple original digital images acquired with the digital acquisition device. The correcting may include a first correcting of the aura regions and a second correcting of the inner regions, in either order.

The method may be performed on raw image data as captured by a camera sensor. The method may be performed on a processed image after being converted from raw format to a known red, green, blue representation. The correcting operation may include replacing pixels within one or more digitally-acquired images with new pixels. The correcting may include enhancing values of pixels within one or more digitally-acquired images. Correcting instructions may be kept in an external location, such as an image header, to the image data.

The dust artifact probability determining operation may include loading the statistical dust map, loading extracted parameter information of a present image, performing calculations within the statistical dust map having extracted parameter variable-dependencies, and comparing dust artifact detection data with the extracted parameter dependent statistical dust map data. The extracted parameter information may include values of aperture size, focal length and/or lens type information. The dust artifact probability determining operation may also include loading the statistical dust map, loading extracted parameter information of a present image, performing a calculation for relating the statistical dust map with the present image according to a selected value of an extracted parameter which is otherwise uncorrelated between the present image and the dust map, and comparing dust artifact detection data with the now correlated statistical dust map data.

Suspected dust artifact regions of at least two images may include inner or shadow regions and aura regions. The comparison may include a comparison of the inner regions and a different comparison of the aura regions, in either order. The dust artifact regions may include an aura region partially obscured by dust and a shadow region substantially obscured by dust inside the aura region.

The determining with respect to a shadow region may be based on an extracted parameter dependent shadow region analysis, wherein the shadow region analysis presumes that certain regions on a sensor of the digital image acquisition device are substantially obscured by said dust. The shadow region analysis may include calculating effects of differences in values of the one or more extracted parameters in different images on dust artifact illumination, shape, position, reflection or transmission properties, distance of dust to the sensor, aperture, exit pupil, or focal length, or combinations thereof.

The determining with respect to an aura region may be based on an extracted parameter dependent aura region analysis, wherein the aura region analysis presumes that certain regions on a sensor of the digital image acquisition device are partially obscured by said dust. The aura region analysis may include calculating effects of differences in values of the one or more extracted parameters in different images on dust artifact illumination, shape, position, reflection or transmission properties, distance of dust to the sensor, aperture, exit pupil, or focal length, or combinations thereof.

The correcting operation may include in-painting or restoration, or both. The in-painting correcting may be applied to the shadow region. This in-painting may include determining and applying shadow region correction spectral information based on spectral information obtained from pixels outside the shadow region. The restoration correcting may be applied to the aura region. The restoration may include determining and applying aura region correction spectral information based on spectral information obtained from pixels within the aura region.

BRIEF DESCRIPTION OF THE DRAWINGS

Figure 1 illustrates a main workflow of a dust removal process in accordance with a preferred embodiment.
Figure 2A illustrates the creation of a dust map.
Figure 2B illustrates an alternative embodiment of the creation of a binary dust map.
Figure 3 outlines a correlation of a dust map to image shooting parameters.
Figure 4A illustrates a procedure for removing dust from images in accordance with a preferred embodiment.
Figure 4B illustrates reconstruction in-painting of dust regions.
Figure 4C illustrates the occurrence of dust in a picture with high edge information.
Figures 4D-4E illustrate the numerical gradient in an image.
Figure 4F illustrates a spiral procedure of in-painting from the periphery inwards.
Figure 5 illustrates a quality control method of checking the dust map.

Figures 6A-6F represents an optical geometry of a lens that may be used in accordance with a preferred embodiment:

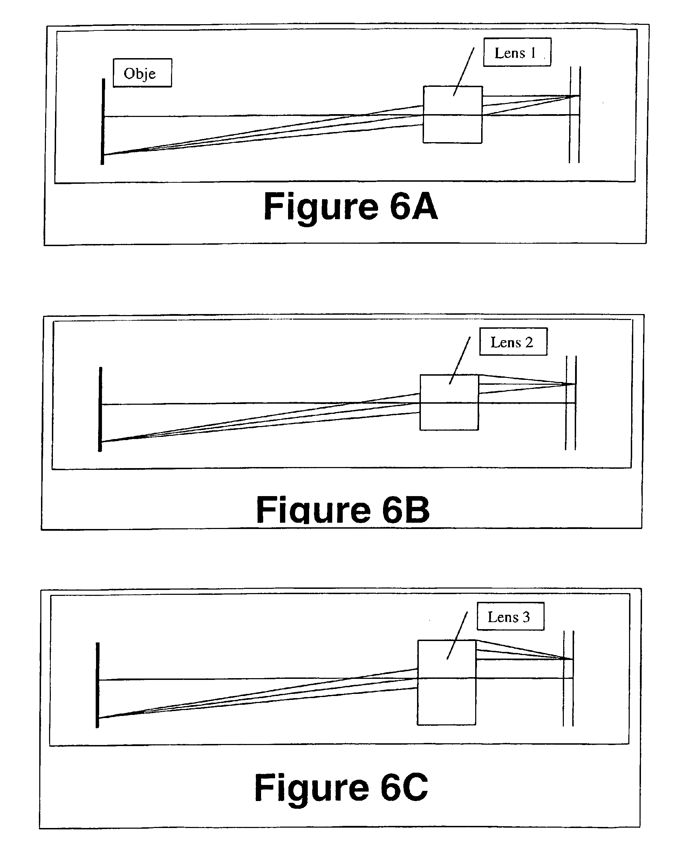

Figures 6A, 6B and 6C represent three lenses with the same, fixed, focal distance, with the same focal number, but with different constructions.

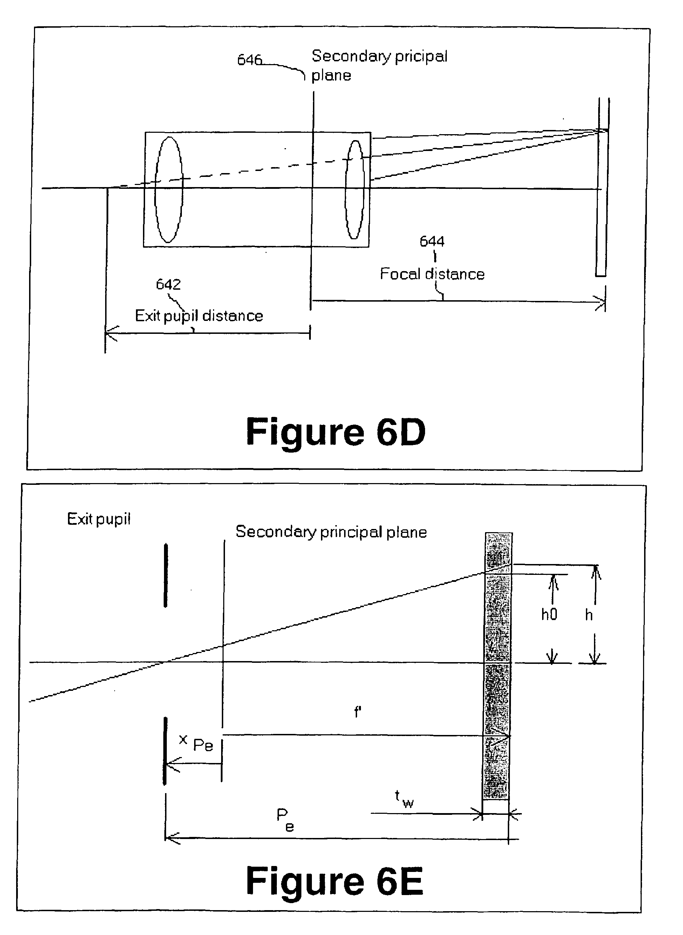

Figure 6D illustrates the concept of an exit pupil and the distance to it.

Figure 6E illustrates the intersections of the principal ray with window and image plane, which is preferably approximately the sensor plane.

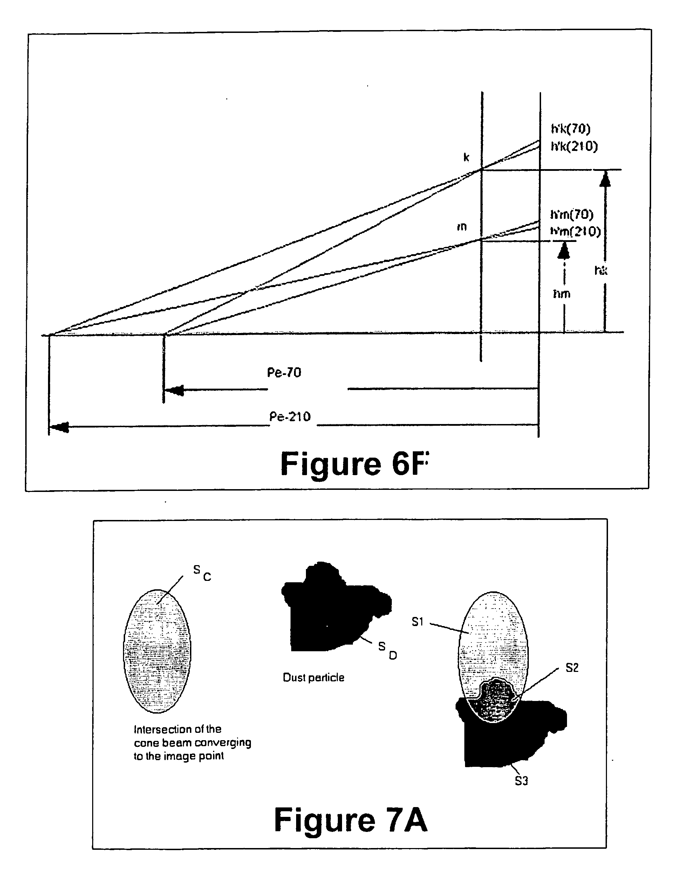

Figure 6F illustrates the shift of one dust spec in comparison to a shift of another dust spec in an image.

Figures 7A-7G generally illustrate effects of dust on the creation of an image using a known optical system:

Figure 7A illustrates an influence of a dust particle located on the input surface of the window on the beam converging towards the imaging point.

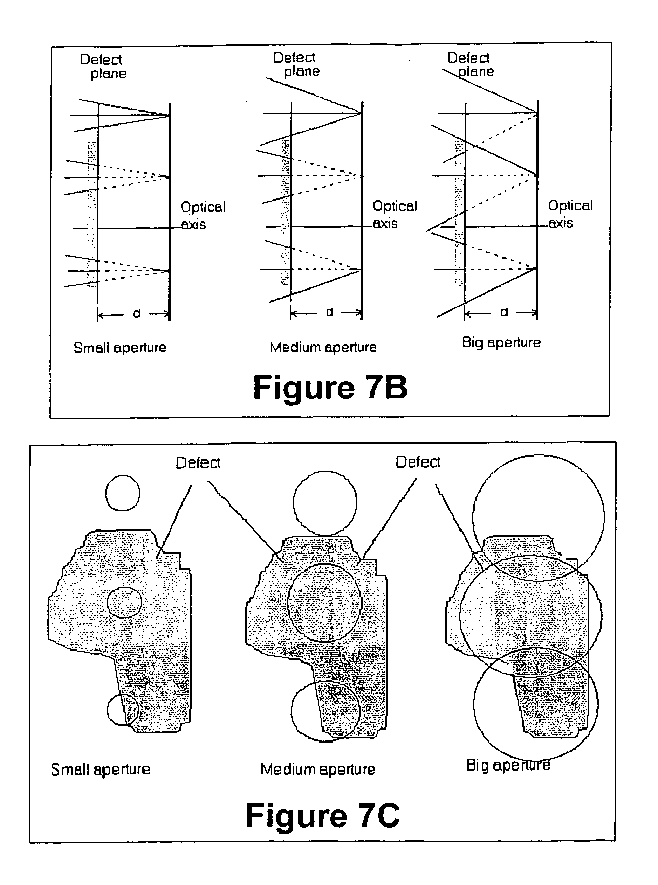

Figure 7B illustrates a side view of the rays as obscured by dust as a function of the aperture.

Figure 7C illustrates a frontal projection of the rays as obscured by a dust as a function of the aperture.

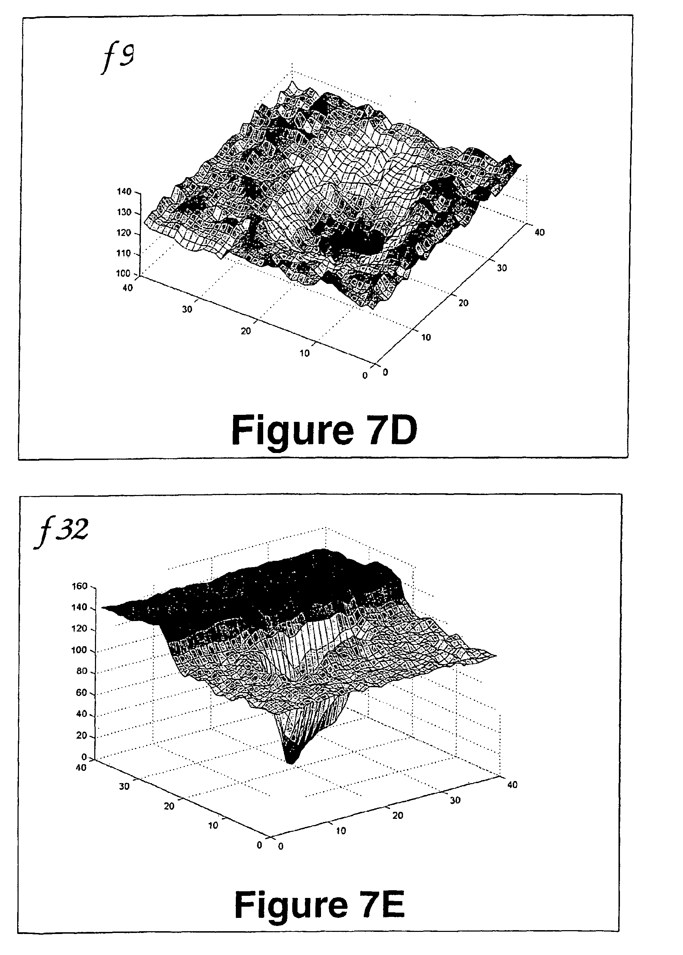

Figure 7D and Figure 7E illustrate a power distribution map of the same dust spec as manifested in different f-stops.

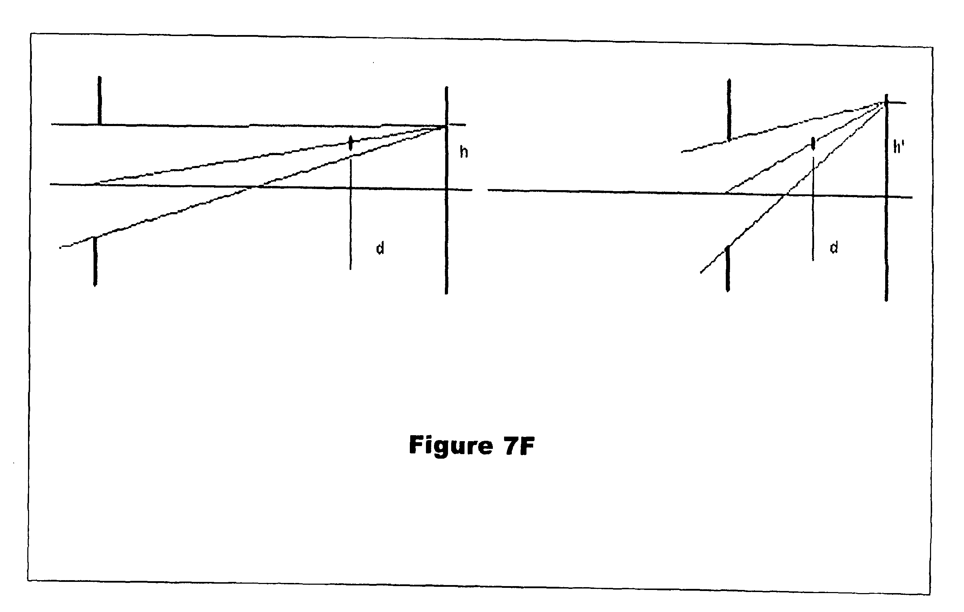

Figure 7F illustrates an effect of the change in focal length on the area obscured by the dust.

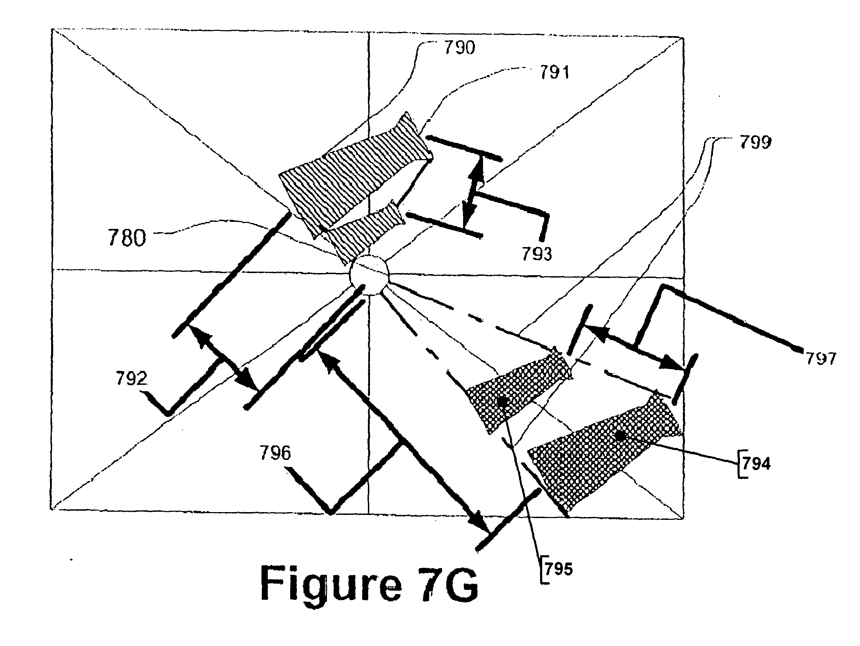

Figure 7G illustrates the direction of movement of dust as a function of the change in focal length in relation to the center of the optical axis.

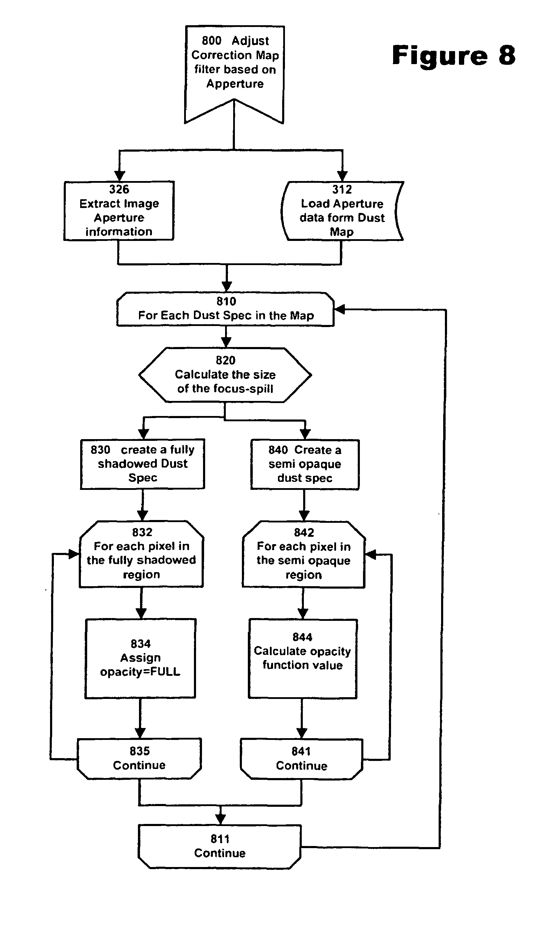

Figure 8 illustrates an adjustment of the dust map based on aperture.

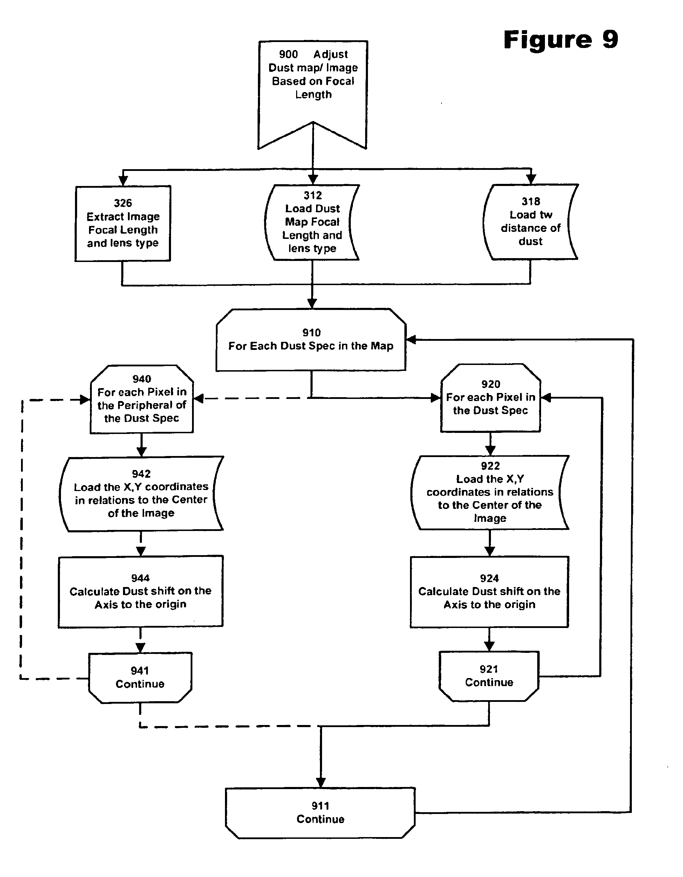

Figure 9 illustrates an adjustment of a dust map based on focal length.

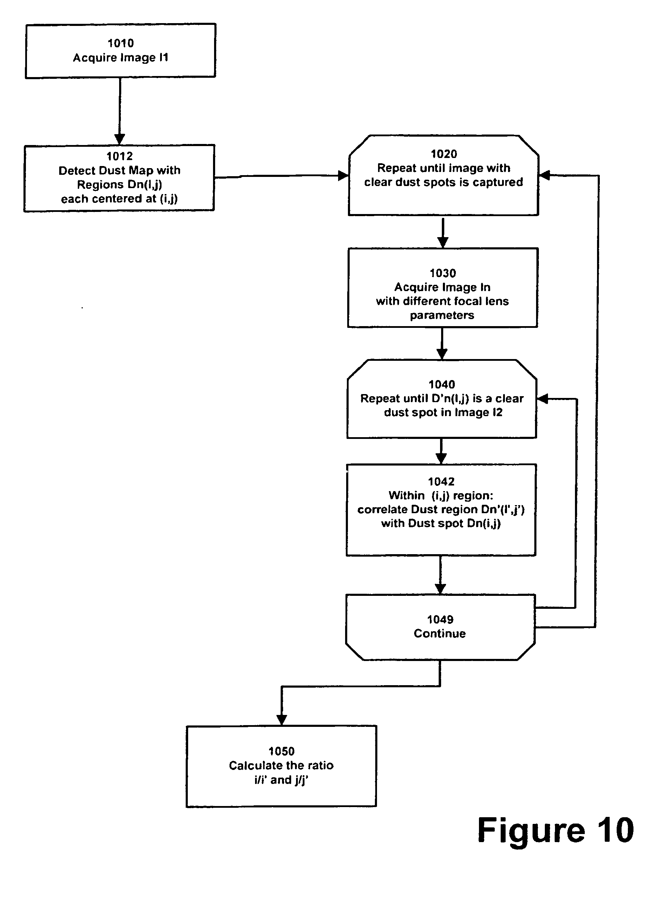

Figure 10 illustrates a process of estimating based on empirical data the values of the parameters in the formulae that defines the change in dust as a function of change in focal length.

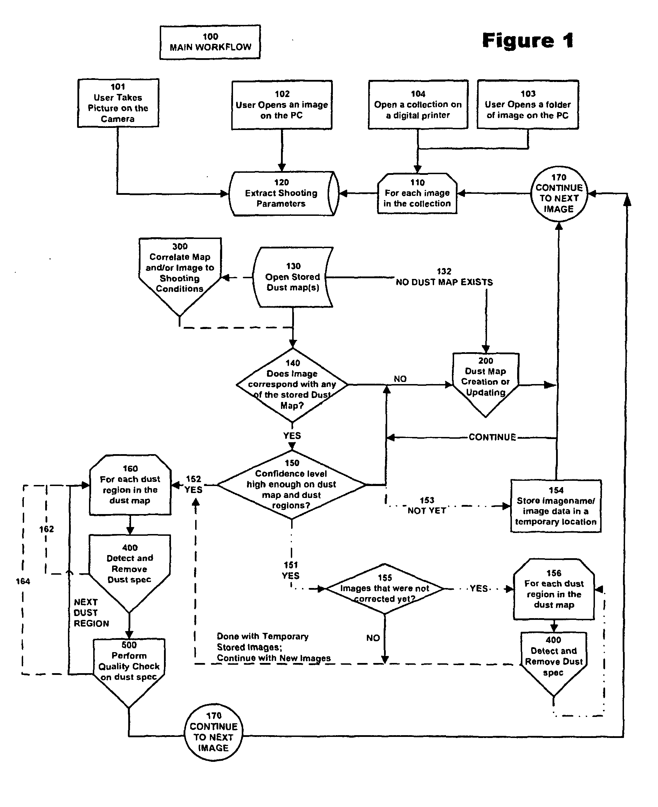

Figure 1 1 illustrates a process of estimating based on empirical data the values of the parameters in the formulae that defines the change in dust as a function of change in aperture.

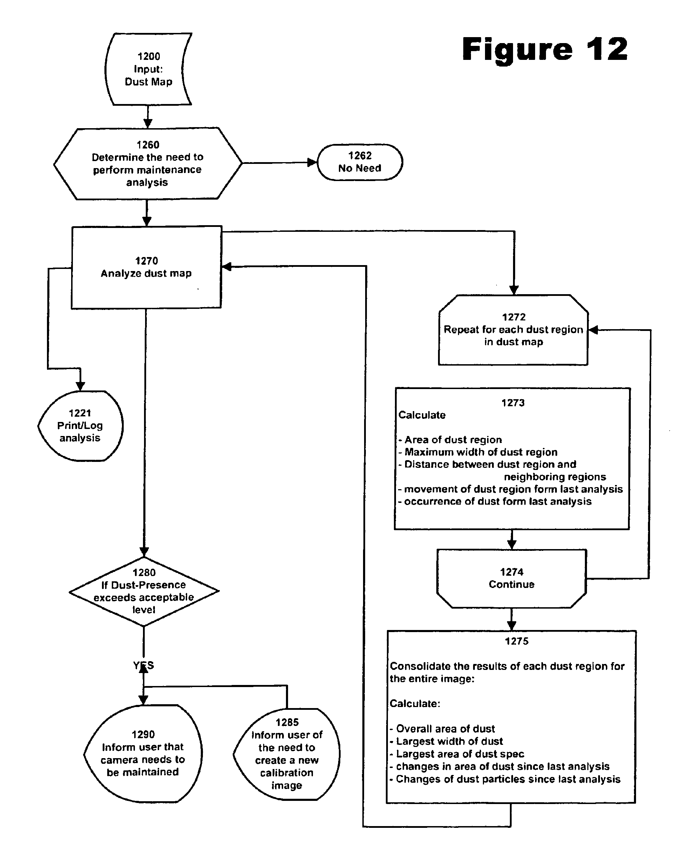

Figure 12 illustrates a further process of dust analysis in accordance with another embodiment.

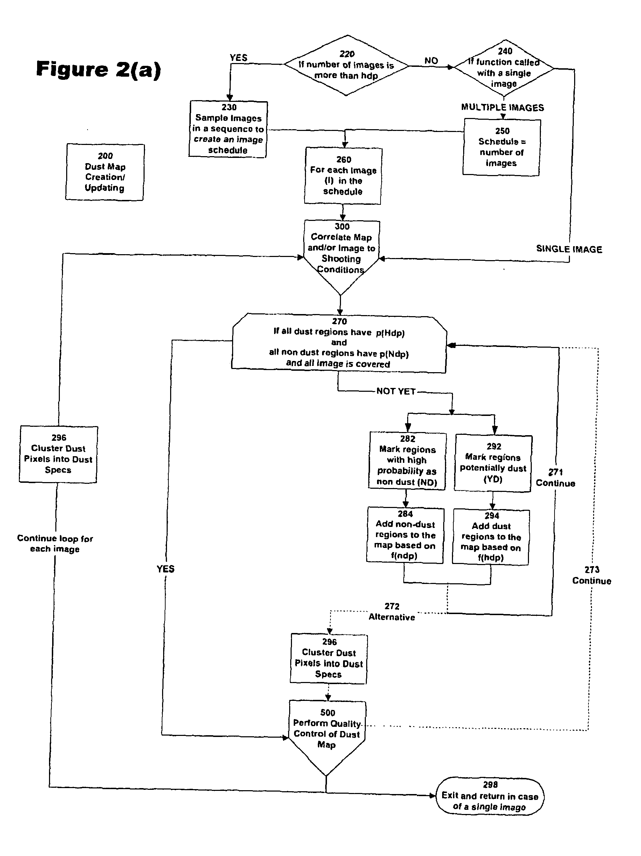

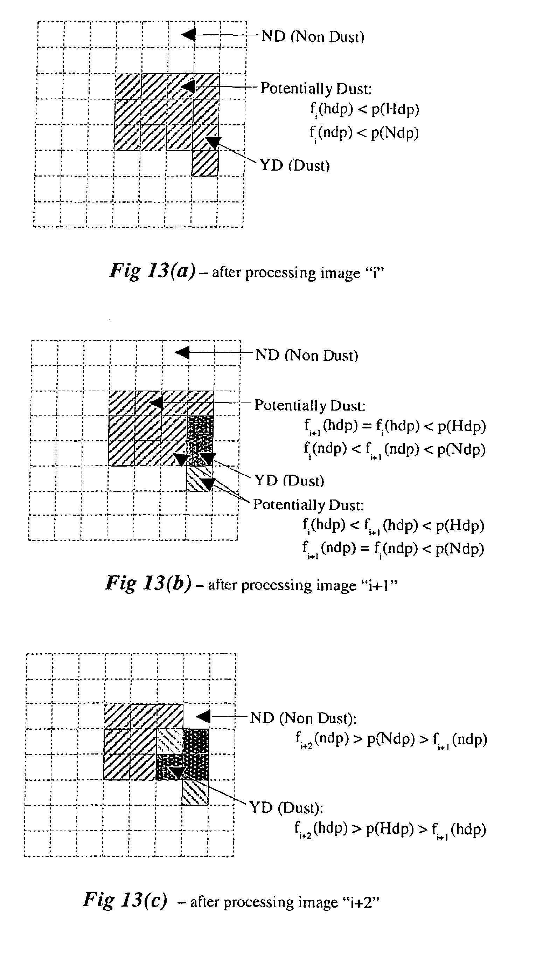

Figure 13 illustrates how a portion of the dust map is created/updated based on the process described in Figure 2(a).

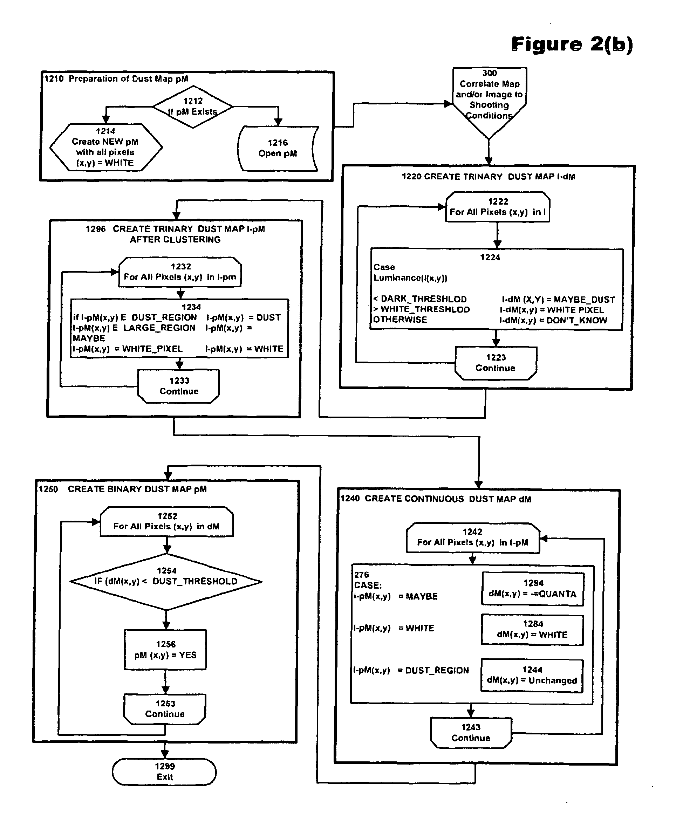

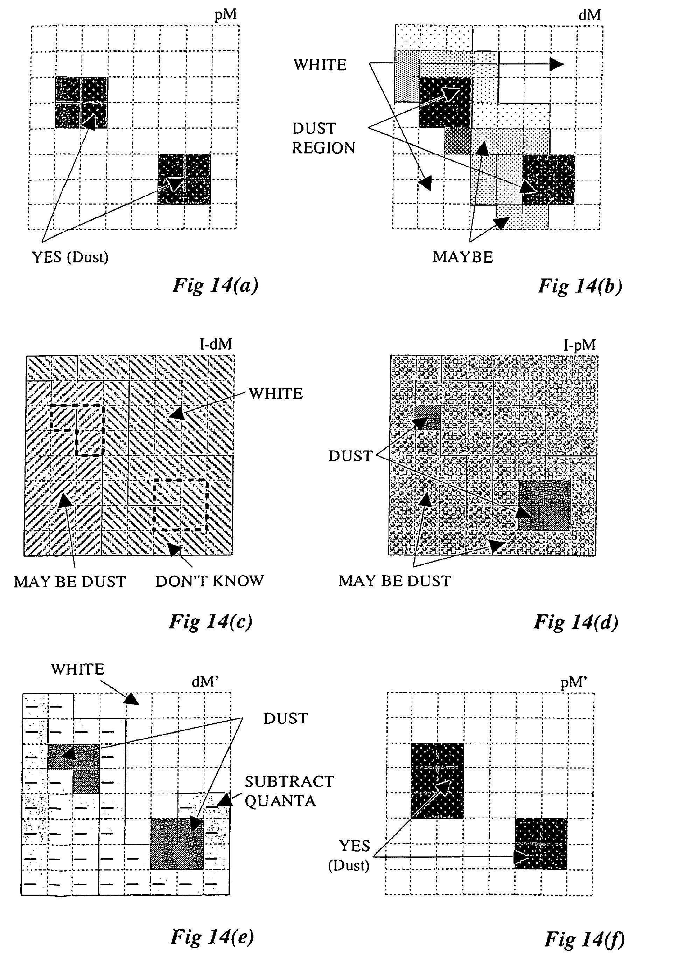

Figure 14 illustrates how a portion of the dust map is created/updated based on the alternative process described in Figure 2(b).

SOME DEFINITIONS

Dust specs: The preferred embodiment takes advantage of the fact that many images may have repetitive manifestation of the same defects such as dust, dead-pixels, burnt pixels, scratches etc. Collectively, all possible defects of this nature are referred to in this application as dust-specs or dust defects. The effects of those dust specs on digital images are referred to herein as dust artifacts.

Acquisition device: the acquisition device may be a multi-functional electronic appliance wherein one of the major functional capabilities of said appliance is that of a digital camera. Examples can include a digital camera, a hand held computer with an imaging sensor, a scanner, a hand-set phone, or another digital device with built in optics capable of acquiring images. Acquisition devices can also include film scanners with area-capture CCDs, as contrasted, e.g., with a line scan mechanism.

D-SLR: Digital Single Lens Reflex Camera. A digital camera where the viewfinder is receiving the image from the same optical system as the sensor does. Many D-SLRs, as for SLR cameras, have the capability to interchange their lenses, this exposing the inner regions of the camera to dust.

A few parameters are defined as part of the process:

| | |
|---|---|
| N | Number of images in a collection. |
| HIDP | Number of images for occurrence to be high dust probability |
| HSDP | Number of recurring specs for label a region to be high dust probability |
| p(Hdp) | Probability threshold for high confidence of a dust spec. |
| N dp | Number of images to determine that a region is not dust |
| p(Ndp) | Probability threshold to determine that a region is not a dust region. |

Most likely HIDP <= HSDP

| | |
|---|---|
| I | is a generic image |
| I(x,y) | pixel in location x horizontal, y vertical of Image I |
| dM | is a continuous tone, or a statistical representation of a dust map |
| pM | is a binary dust map created from some thresholding of dM. |

MATHEMATICAL MODELING OF THE OPTICAL SYSTEM

Prior to understanding the preferred embodiments described herein, it is helpful to understand the mathematical modeling of the camera optical system. With this modeling, the preferred embodiments may advantageously utilize a single dust map for dust detection and/or correction techniques rather than creating a dust map for each instance of dust artifact having its own shape and opacity depending on extracted parameters relating to the imaging acquisition process. With an ability to model the optical system and its variability, a single map may suffice for each lens or for multiple lenses, and for multiple focal lengths, multiple apertures, and/or other extracted parameters as described in more detail below.

In order to study the shadow of an object on a plane, it is helpful to consider the following:

- the illumination of the object (the spectral and coherent characteristics of the light)
- the shape of the object (including its micro-geometry)
- the reflection and transmission properties of the object
- the relative position of the object and the plane

The case of interest for defining the model of dust as it appears on the sensor, is that of an object close to the image plane of a lens, which is a complex optical system, with natural light illumination. The object shape and its reflection and transmission properties are practically impossible to model because specific information on the dust particle(s) is not available. However, because the dust particles are small, it is highly probable they will have the same reflection and transmission properties on their surfaces. The distance between the dust and the sensor (which lies in the image plane) is small and is in the order of magnitude of a fraction of a millimeter.

Some definitions are now provided (see figures 6E and 6F):

Table 1. Parameters in mathematical formulation of the Optical system.

| Pe - | exit pupil position, the distance between the sensor, and the Exit Pupil |
|---|---|
| tw - | thickness of the window, distance of dust to the image plane |
| f- | focal length of the objective |
| f/#- | focal number |
| (u,v) - | denote the coordinate system of the input surface, having its origin in the intersection point with the lens optical axis. |
| (x,y)- | the dust position on the image plane in the coordinate system in the image plane with the origin in the intersection point with the lens optical axis. |
| $I(x,y)$- | be the value of the irradiance in the image point $(x, y)$ |
| D - | is the exit pupil diameter |
| $h_0$ | is the distance of the objects on the dust plane to the center of the optical path |
| h | is the distance from the object to the center of the optical axis |
| $h_k$ | is the distance of dust spec k on the dust plane to the center of the optical path |

Figure 6A, 6B and 6C represent three lenses with the same, fixed, focal distance, with the same focal number, but with different constructions. The first construction, in figure 6A is the most common. The second in figure 6B is specific for the lenses used in metrology. This type of lens is called telecentric in the image space. The third construction in figure 6C is rarely found in optical systems, but not impossible

Figure 6D illustrates the concept of an exit pupil and the distance to it. The exit pupil distance, 642, is the parameter that defines this property, and represents the distance from the secondary principal plane, 646, of the lens and the intersection of the axis of the light cone and optical axis of the lens. The focal distance 644 represents the distance from the secondary principal plane to the image plane.

In the case of the second type lens, as defined in Figure 6B, the exit pupil position is at infinity. In the first and third cases, figures 6A and 6C respectively, the intersections of the light cone with the dust plane are ellipses. In the case of the second lens type, Figure 6B, the intersection of the light cone with the dust plane is a circle.

In the case of zoom lenses, the exit pupil position can be constant (in a very few cases), or can vary significantly, depending on the construction of the lens.

This information about the exit pupil is usually not public because, in general, it is not useful for the common user of photographic or TV lenses. However, this information can be readily determined with some measurements on an optical bench. Alternatively, this information can be achieved based on an analysis of dust in the image.

Figure 6E illustrates the intersections of a principal ray with the window and image plane, which is also the sensor plane. This figure illustrates the various parameters as defined in Table 1.

Figure 7A describes the influence of a dust particle (obscuration) located on the input surface of the window (obscuration plane), on the beam converging towards the imaging point.

Figure 7B illustrates the side view of the rays as obscured by a dust as a function of the aperture. Figure 7C illustrates the frontal projection of Figure 7B, of the rays as obscured by a dust as a function of the aperture. Figure 7D and Figure 7E illustrates a power distribution map of the same dust spec as manifested in different f-stops, namely a relative open aperture f-9 for Figure 7D and a closed aperture, namely f-22 and higher, in Figure 7E. One can see that the dust spot as recorded with the closed aperture, is much sharper and crisper.

The dust particle is situated in the window plane, and totally absorbing or reflecting the portion of the beam (S2) that normally reaches the image point (P). Let $I(x,y)$ be the value of the irradiance in the image point $(x,y)$ in the absence of the dust particle. Assuming that the energy in the exit pupil of the optical system is uniformly distributed, then, in the presence of the dust particle, the $I(x,y)$ will be reduced proportionally with the ratio between the area of the intersection of the light beam (S1) with the clean zone of the window, and the whole area of the same intersection (Sc).

Remember that Sc is a function of the lens f-number (f/#) and window thickness $t_w$ So, the value of the real irradiance in the presence of dust will be

$$I'(x,y) = I(x,y)\frac{S1}{Sc} \qquad (1)$$

or, by taking into account that S1 = Sc - S2 and S2 = Area of intersection between the dust particle and the illuminated area:

$$I'(x,y) = I(x,y)\left(1 - \frac{S2}{Sc}\right) = I(x,y)\left(1 - \frac{S_{D \cap C}}{Sc}\right)$$

$$(1\text{-a})$$

Because the dust particle is small, the next assumption can be made:

For all the image points affected by a specific dust particle, the area Sc remains constant. In the case of the telecentric illumination, this assumption holds true for all the image points. With the assumption above, we can correlate the dust geometry, position and shadow.

First of all, we now study the distribution of the irradiance on the input plane of the window. The intersection of the conic beam with this plane is generally an ellipse. The major axis of this ellipse is along the intersection of the plane mentioned above and the plane determined by the image point and the optical axis of the lens.

The minor axis is

$$b = t_w \frac{D}{|P_e|} \qquad (2)$$

whereas the major axis is

$$a = t_w \frac{D}{|P_e|} \frac{1}{\cos\left(arctg\frac{h}{|P_e|}\right)} \qquad (3)$$

where D is the exit pupil diameter , so

$$D = \frac{f'}{f/\#} \qquad (4)$$

In order to reach a complete formula of the irradiance distribution we now stress the assumption that for all image points affected by a chosen dust particle, "a" will not vary significantly.

Let $(u_0, v_0)$ be the point of intersection of the principal ray with the plane mentioned above. Thus, the characteristic function of the illuminated zone will be

$$C = C(u, v, u_0, v_0, f', f/\#, P_e, t_w) \qquad (5)$$

Let D(u ,v) be the characteristic function of the dust. Thus,

$$S_{D \cap C} = \iint_{R \; xR} D(u, v) * C(u, v, u_0, v_0, f', f/\#, P_e, t_w) \, du \, dv \qquad (6)$$

$$I'(x, y) = I(x, y)\left( 1 - \frac{\iint_{RxR} D(u, v) * C(u, v, u_0, v_0, f', f/\#, P_e, t_w) \, du \, dv}{Sc} \right)$$

$$(7)$$

which, using the equation 11, yields

$$I'(x, y) = I(x, y)\left( 1 - \frac{\iint_{RxR} D(u, v) * C\left( u, v, \left(1 + \frac{t_w}{P_e}\right)x, \left(1 + \frac{t_w}{P_e}\right)y, f', f/\#, P_e, t_w \right) du \, dv}{Sc} \right) \qquad (8)$$

The terms $(I+t_w/P_e)x$ and $(I+t_w/P_e)y$ determine the "movement" of the dust shadow with the change of the focal distance and, implicitly, of the Pe, as explained later on in equation 11.

In the case of the telecentric illumination

- Pe is infinite ,
- u0 = x and v0=y.
- the ellipse becomes a circle

Qualitatively, as described quantitatively in equation 8, the fall off, or the diminished effect of the dust on an image varies as follow: The dust is becoming less significant as the aperture becomes larger, or the f-stop is smaller and the pixels are inversely affected based on the distance of the pixel to the periphery of the dust.

Figure 7F illustrates the adaptation between the dust map and the image based on the focal length of the lens. In this figure one can qualitatively see that the area covered by the dust spec will be shifted as a function of the focal length. Also, information about the spatial distribution and/or orientation of dust particles within the dust map may be used to assist with determining probabilities that regions are either dust or non-dust. As an example, one could expect that a global average of the orientation of elongated dust particles would average to zero. However, at a more localized level, charged and/or magnetized dust particles can tend to align with similar orientations due to local dielectric forces. This effect would be partly dependent on the size, overall shape distribution (round or more elongated) and the overall distribution (uniform or clumped) of the dust regions in the dust map. This can tend to be particularly helpful when a decision is to be made as to whether to eliminate certain regions. As an example, if most of the dust is determined to be aligned in a radial direction relative to the center of the sensor area for a particular camera, it may be further determined, based on this statistical information, that particles in a concentric alignment are less likely to be dust.

Given the definitions above, a more quantitative model can be deducted.

$$h = h_0 \frac{1}{1 + \frac{t_w}{P_e}} \cong h_0 \left( 1 - \frac{t_w}{P_e} \right) \qquad (9)$$

because the ratio $t_w/P_e$ is small. Note that $Pe$ has in certain common cases a negative value.

Next let (u,v) denote the coordinate system of the input surface, having its origin in the intersection point with the lens optical axis. Similarly, let (x,y) be the coordinate system in the image plane with the origin in the intersection point with the lens optical axis.

Thus, if the principal ray of the beam intersects the input window plane in the point $(u,v)$, the point in the image plane on the same principal ray will be the inverse transformation of (10)

$$\begin{bmatrix} x \\ y \end{bmatrix} = \begin{bmatrix} 1 - \frac{t_w}{P_e} & 0 \\ 0 & 1 - \frac{t_w}{P_e} \end{bmatrix} \begin{bmatrix} u \\ v \end{bmatrix} \qquad (10)$$

with the same assumption of a small tw/Pe ratio will be

$$\begin{bmatrix} u \\ v \end{bmatrix} = \begin{bmatrix} 1 + \frac{t_w}{P_e} & 0 \\ 0 & 1 + \frac{t_w}{P_e} \end{bmatrix} \begin{bmatrix} x \\ y \end{bmatrix} \qquad (11)$$

Figure 7G depicts how points will shift as a function of the proximity to the optical center. Basically the farther the dust is from the center, the larger the displacement is. However, the direction and size of the displacements can be estimated.

There are several other parameters that are not generally available. The distance, tw, of the dust to the image plane is typically fixed for a particular model of camera and can be determined from a single measurement. The exit pupil distance may vary depending on the focal length of the lens. More particularly, for a zoom lens, the exit pupil distance may not be fixed, and can vary up to a telecentric mode where the distance is infinity.

Such information can be empirically predetermined by making an analysis of images taken by a known camera and lens, as illustrated in Figure 6F and as explained below. In this case, a determination of the effect of a single dust spec on each of a series of image can be used to calculate the effect of any other dust spec on any other image, given some additional knowledge relating to the acquisition parameters for the latter image, in particular parameters relating to the optical sub-systems of the camera and the attached lens. The most useful determination is of the spatial shifting of dust specs between images but other determinations relating to the geometric and optical properties of a dust spec can be made from the foregoing optical model. As illustrative examples of geometric properties we cite the relative size of a dust spec, and distortions in the geometric shape of a dust spec arising from lens aberrations (i.e. non-circular lens symmetries). Illustrative, examples of optical properties include the opacity, induced color shift and sharpness of the dust spec. In Figure 6F an exemplary zoom lens of 70mm-210mm is illustrated:

- Pe-70 is the exit pupil position for the lens at 70mm,
- Pe-210 is the exit pupil location when the lens is at its highest enlargement 210mm.
- k, is known dust
- m is hypothetical dust
- $h_k$ is h for a specific dust particle k.

Knowledge of the spatial shift of dust image, preferably near to one of the corners of the image, can be determined from equation (9)

$$h \cong h_0\left(1-\frac{t_w}{P_e}\right) \quad (9)$$

Now this can be rewritten for a specific dust particle (k) in order to emphasize the dependence on the focal distance,

$$h_k(f) = h_{0k}\left(1-\frac{t_w}{P_e(f)}\right) \quad (9\text{-a})$$

or

$$\frac{h_k(f)}{h_{0k}} = \left(1-\frac{t_w}{Pe(f)}\right) independent\ from\ k \quad (9\text{-b})$$

So, if we know the evolution of the image of the "k" dust particle we can find the evolution of the "m" dust image

$$h_m(f) = \frac{h_{0m}}{h_{0k}}h_k(f) \quad (9\text{-c})$$

A remaining difficulty with this formula is that we don't know the positions of the dust particles.
Writing the upper formula for a given focal distance , say $f_0$, we have

$$\frac{h_{0m}}{h_{0k}} = \frac{h_m(f_0)}{h_k(f_0)} \quad (9\text{-d})$$

So, finally

$$h_m(f) = \frac{h_m(f_0)}{h_k(f_0)}h_k(f) \quad (9\text{-e})$$

This relationship does not require a knowledge of the exit pupil dependence, the thickness of the window and the spatial location of the dust. Figure 7G, illustrates this phenomena visually. Based on the above formulae, and in particular 9-e and 11, one can see that the dust movement is not constant, as a function of the focal length change, but is dependent on the distance of the dust from the center of the optical path.

Qualitatively, the farther the dust is from the center, the larger the displacement will be. In other words, dust close to the periphery of the image will exhibit significantly larger movement (and geometric and size distortions) than dust which maps onto the center of the image.

Referring to figure 7G which describes the movement of two hypothetical dust spots, 790 and 794 having a different distance, 792 and 796 respectively, to the center of the optical path 780. The movement of each pixel is always on the line between the pixel and the center of the optical path. This is based on the assumption of a linear relationship as described by equation 11. Thus the movement of the dust edge of dust spec 794 is along the lines depicted in block 799. Based on assumed coefficients for equation 11, the dust spec moves by a fixed ratio $1 + \dfrac{t_w}{P_e}$ , which can be positive or negative, which means movement towards the center or out of the center. In this figure, dust spec 794 will move to become 795 while dust spec 790 will move to become 791. Because the distance of dust 794 to the center depicted by 796 is larger than the corresponding distance depicted by block 792, the movement of the dust 794 will be larger.

Alternatively, given formula (11) and given an image where the dust can be detected, one can calculate Pe as follows (if tw is known):

$$\frac{x}{u} = \frac{y}{v} = 1 + \frac{t_w}{P_e} \qquad (11\text{-a})$$

$$P_e = \frac{t_w}{\dfrac{x}{u} - 1} = \frac{t_w}{\dfrac{y}{v} - 1} \qquad (11\text{-b})$$

In summary of the mathematical model of the optical system for dust, in the general case, the way the image is affected by the dust depends on:

- exit pupil position Pe
- thickness of the window tw
- focal length of the objective f'
- focal number f/#
- the dust position on the image plane (x,y)

This can be calculated by knowing the optical system's components:

a) the window thickness (tw),
b) the function Pc(f), and
c) the coordinates (u,v) of the dust if we want to determine the dust image position on the image plane

DETAILED DESCRIPTION OF THE PREFERRED EMBODIMENTS

Several examples of preferred embodiments of the main invention will now be described. The main workflow of detecting and removing the dust from an image is illustrated in Figure 1. In general, this particular preferred embodiment is directed at removing dust from a collection of images acquired using the same image acquisition device. Specifically, a user may acquire a picture on the digital camera (as illustrated in Block 101). Alternatively (102), a user may open a single image on a external device such as a personal computer, open (103) a folder of images on an external device or open a collection of images on a digital printing device (104).

The preferred embodiment then extracts the shooting parameters (120). Such parameters include, but not limited to data about: Camera name, Lens brand, lens type, focal length at acquisition, aperture range, aperture at acquisition. In addition, some parameter, in particular from those relating to the lens and the camera may be also stored within the acquisition device or the processing device, or subsystems thereof. Such information may include parameters such as exit pupil, exit pupil distance from the lens, or distance of dust from the sensor plane (imaging plane) for the camera. An exemplary table with such data is shown below:

Table 2 Extracted Parameters

| Field | Example of data | Category |
|---|---|---|
| Lens Manufacturer | Nikon | lens |
| Lens Type | AF 24mm-45mm f2.8-f3.5 | lens |
| Focal Length | 38mm | Acquisition data |
| Aperture | f-16 | Acquisition data |
| Dust distance | 0.156mm | Camera data |
| Exit pupil | 19mm | Lens data |
| Exit pupil distance | 230mm | Lens data |

The dust map may also include meta-data that contain additional parameters or acquisition data which can additionally supplement or partially substitiute for said list of extracted parameters. A discussion of meta-data as it relates to image acquisition is found in more detail at PCT patent application no. PCT/EP2004/008706, and is hereby incorporated by reference.

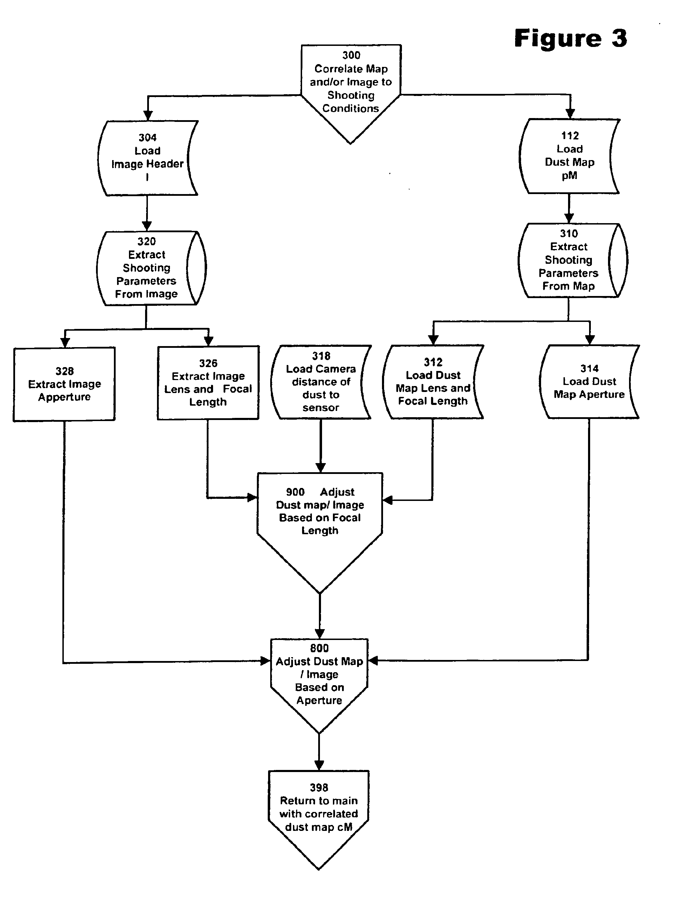

In the case that the system deals with multiple images (as defined in blocks 103, and 104), the algorithm describes a loop operation on all images (110). The first step is to open a dust map (130). If none exists (132) the system will create a new dust map (200) as further described in Figures 2. In the case that the system has more than one dust map (130), which may occur, for example, when a camera has multiple exchangeable lenses, the software will attempt to correlate one of the maps (300) to the image. This process is further illustrated in Figure 3. In particular this correlation refers to the adjustment of the shooting conditions to some accepted standard. The most significant acquisition parameters are the aperture and the focal length. The correlation process is interchangeable and may be achieved either by adjusting the image to the map or, conversely, adjusting the map to the image. In some extreme cases it may be advantageous for both acquired image and dust map to be adjusted to some common ground. This may occur, for example, when the map is calculated based on an aperture that the lens does not reach or based on a different lens than the one used with a different optical configuration. Alternatively, such as in the case of a new lens, this process (300) as called by (130), may be used to adjust the map onto a new map, or to merge two preexisting maps into a single one. From that stage onwards the system may continue with a single map.

If no dust map corresponds with the image (140), a new dust map is created (200). When a dust map does correspond (140) to the image, the preferred embodiment checks if the dust specs as defined in the dust map are of high enough confidence levels to be determined as dust regions (150). The determining and calculating of said confidence level for the dust map in general and for an individual dust spec, is further discussed in Figures 2 and Figure 3. If the confidence level is low, the image is added to the updating of the dust map (200). If after the image is added, the confidence level is increased sufficiently (152) the software continues to the dust removal process (160). Otherwise, the software progresses to the next image (170).

For example, a dust map is considered valid only after a minimum number of images, say N, are analyzed, and a dust spec is considered valid after a co-located dust region is detected in a second minimum number of images, say M. Note that M < N. In an example where N=6 and M=3, then after analyzing 4 images, the software may have determined and confirmed the existence of a substantial number of dust specs and updated the dust map accordingly (200), but it must continue to analyze additional images, 2 more in this example, in order to validate the dust map, and allow the software to proceed to the correction (160) stage. Prior to achieving said validation of the dust map no correction will be done. However, images can be corrected retrospectively after the dust map has been validated. Thus even images that were originally acquired prior to validation of the dust map may be corrected.

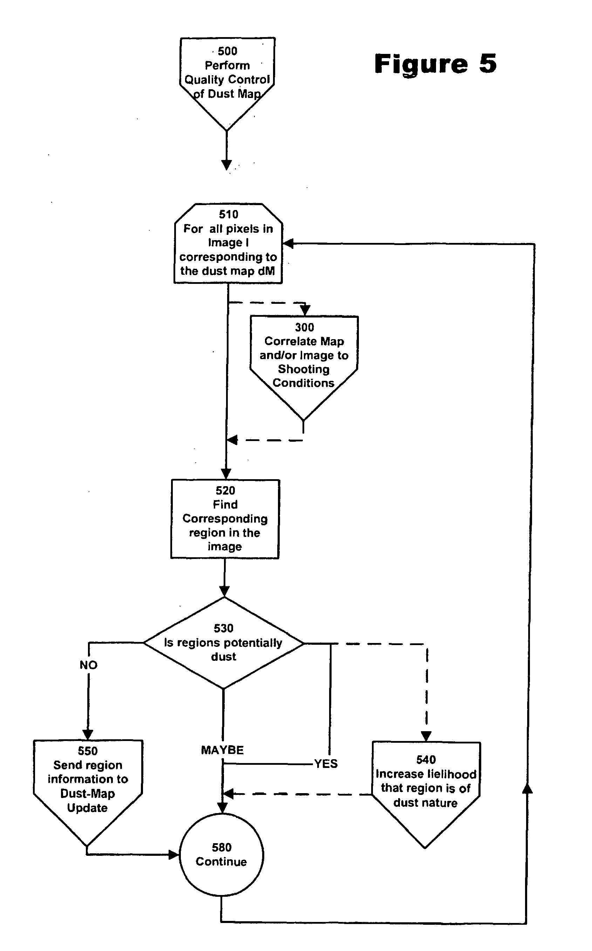

Referring to the dust detection and correction process (160). This process may be executed as a loop on every dust spec in the dust map, with a stage of detection and correction (400, followed by 500 and 160). Alternatively, the process can be implemented where all dust specs are detected first (162) and then all dust specs are corrected (164). The decision as to the sequence of operations varies based on the requirements of a particular embodiment of the invention. As part of the detection process, the software also performs a self testing (500) where each new image introduced is compared to the dust map. This process is further defined in Figure 5. The importance of this stage for each dust spec and for the dust map, is that in this manner, if the dust situation changes, such as a single spec moving around or the camera being serviced, the software will detect the change and determine that re-validation of the dust map is required. Note that the re-validation process can be performed locally on individual dust specs, or alternatively on the entire dust map, or in certain circumstances through a combination of both local and global validation.

Referring to Figure 2A where the Dust map creation and updating is defined: This process can receive a collection of images as defined by Figure 1 blocks 103 and 104, or one image at a time, as defined by Figure 1, blocks 101 and 102.

If the function is called with a single image (240-SINGLE IMAGE) the image is directly provided to the calculations (270). If multiple images are provided (240 MULTIPLE IMAGES), then an initial step is to define if there are more than enough images for defining the map (220). This step is designed to optimize the creation process for a dust map in case there are a large number of images.

The sequence of the images that are to be referenced is based on the original collection of N images as defined in Figure 1 blocks 103 or 104. The sequence of images is based on a few criteria such as: giving more weight to the most recently acquired images, and if images are shot in a relatively small time frame, the sequence in which images are processed in order to create the dust map is determined so as to try and minimize repetitiveness between similar images that may have been taken of the same object with little movement. The sequence will not be limited to the number of images (HIDP) because it may well be that some regions will not have enough data in them to evaluate and validate dust specs within said region. This may happen in cases where part of the image is very dark in some of the images.

Alternatively, the parameters, including metadata, as extracted from the images will determine the sequence and the number of dust maps that are to be calculated. For example if a folder contains N=30 images, where 15 were taken with one camera and 15 with another, the sampling step (230) may create two map sets.

Another criteria for creating a new set or checking for new dust is the type of lens. If a lens is changed, it means that the CCD-cavity was potentially exposed to new dust. This may trigger a new revalidation process. It may also indicate that the camera was serviced, or that the photographer cleaned the camera. Of course, if there is a parameter that defines when a camera was serviced, this will trigger the creation of a new dust map.

The next loop (270-271) defines the marking of each region and the addition of the region to the dust map if it is not already there. There are three type of regions in an image. The first are regions with sufficient information to determine whether they are of dust nature. As an illustrative example, small dark regions surrounded by a light and relatively large and homogenous background area. Other criteria may include regions with a relatively low color saturation. The second group are regions that are definitely non-dust. Such regions are for example all clear, or of high color saturation. Other regions are inconclusive such as very dark segments of an image. In this latter case, it will be hard to detect the dust even if it was part of the image. Alternatively when looking for over exposed or "dead pixels" the criteria may be reversed, if the pixels appear as a white spec in the image.

These criteria may be also be a function of the acquisition parameter. For example an image with a open aperture may all be marked as inconclusive for the determination of dust, because the dust may not be focussed sufficiently to appear in determinable form on the image.

Regions that are potentially dust are marked (292) and then added to the dust mask (294). The addition process may include the creation of a new dust spec region on the map, or the modification of the probability function, or the confidence level, or the size or geometric shape, or location of the centre of an existing region. Regions that are most likely non-dust are marked (282) and then added to the dust mask (284). The addition and/or modification of said regions needs to be normalized to the shooting conditions as defined by the dust map (300), if this step was not performed prior to entering this function, as optionally defined in Figure 1. This loop continues over all regions of the image (271). Alternatively (272), each region is compared (500) with the dust map to see if any cases exist where the monotonicity is broken, i.e. a region that was of high probability to be dust is now non dust.

An illustrative example of how the dust map creation/updating process of Fig 2(a) can create new dust or non-dust pixels in the dust map is given in Figs 13(a)-(c). Starting with the dust map after the image "i" has been processed, Fig 13(a), the diagrams show how the increasing of the values of f(hdp) or f(ndp) produces a new YD (Dust) pixel or a new ND (Non Dust) pixel respectively, when the thresholds p(Hdp) and p(Ndp) are eventually exceeded as illustrated in Fig 13(c).

Figure 2(b) describes an alternate embodiment of the dust map creation process. Block 1210 describes the preparation of the dust map which includes either opening an existing map (1216) or creating a new one (1214), where all pixels as a starting point are non dust or WHITE. After the map is correlated to the shooting conditions, 300, a dust map 1-dM is created in block 1220. All pixels in the image (1222) receive the following values (1224) based on the luminance value of the pixel:

```
Case:
    If luminance is less than DARK_THRESHOLD, then l-dM (X,Y) = MAYBE_DUST;
```

```
If luminance is greater than WHITE_THRESHLOD, then l-dM(x,y) = WHITE PIXEL;
OTHERWISE l-dM(x,y) = DON'T_KNOW.
```

Once all pixels are analyzed (1220) they are then clustered, (1296) into dust regions or dust specs in a I-pM dust map. The next step is to create a dust map dM (1240) which is continuous based on the value of the individual pixels. In the final stage (1250), the dust map is separated into regions based on at least one predetermined value THRESHOLD to create at least one binary mask.

An additional illustrative example of how the alternative dust map creation/updating process of Fig 2(b) can create or remove dust specs is given in Figs 14(a)-(f). It is assumed that before the current image is loaded, the pM and dM maps have the aspect depicted in diagrams 14(a) and 14(b) respectively. Note that pM is a binary map, whereas dM is a multilevel (continuous) dust map. After the current image goes through the 1220 block of Fig 2(b), the resulting I-dM has the aspect illustrated in Fig 14(c) - a three-level, or trinary, map. After the processing in the 1296 block of Fig 2(b), the I-pM map depicted in Fig 14(d) is obtained - also a trinary map. Next, for all the pixels belonging to "MAYBE DUST" regions, the values are decremented by a statistical quanta "quanta" as specified in block 1240 of Fig 2(b). The aspect of the resulting dM' map is similar to that of Fig 14(b), except that the actual values of the "MAYBE DUST" pixels which are, consequently, smaller. Now a thresholding dM' (block 1250 of Fig 2(b)) the new pM' map is obtained as illustrated in Fig 14(f). As can be seen from 14(f), a new dust pixel will have appeared in the left dust spot and a pixel will have dissapeared in the right dust spot of the binary map. *(Note that for the purposes of this examples it has been assumed that one pixel in each of the dust blocks of Fig 14(a) is close enough to the DUST/NOT-DUST thresholds to be altered by applying the single process step illustrated in Figs 14(a)-(f). In practical embodiments it will normally take multiple process steps for pixels to transition from DUST or NOT-DUST.)*

Figure 3 illustrates the process of correlating the image to a default settings of the dust map. This process defines correlating the image to the dust map, the dust map to a new dust map or the dust map to the image. Said correlation processes are interchangeable and can be done by adjusting the image to the map or adjusting the map to the image. In some cases both acquired image and dust map may be adjusted to some common ground as was previously described..

To begin with, the dust map is being loaded (112) and the default data on which the map was generated is extracted (310). Such data may include the lens type, the aperture and the focal length associated wit the default state. In concurrence, the information from the acquired image (304) is extracted (320) and compared to the one of the dust map.

As explained in the mathematical model of the optical system, the two principle adjustments between the dust map and the image are based on focal length, and on aperture, each creating a different artifact that should be addressed. Knowledge of the phenomena may assist in creating a better detection and correction of the dust artifact. Alternatively, in a separate embodiment, analysis of the image and the modification of the dust as aperture and focal length are changed, may be used to construct an empirical model that describes transformations that define changes to the dust as a function of changes in the lens type, the focal length and the aperture. This latter approach is particularly useful in the determination of non-distortions which may occur for certain lens geometry's.

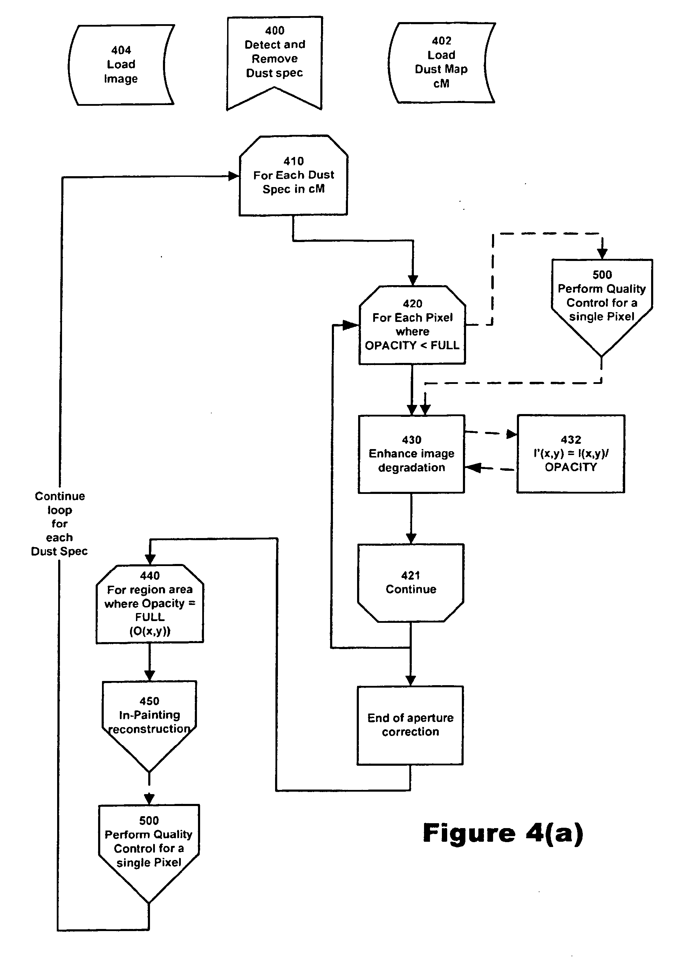

The mathematical distortion of the dust as a function of the aperture is illustrated in figures 7A-7E. The geometrical optics illustrations of the above phenomena are depicted in Figures 6A-6F. Referring to figure 3, after extracting the data, the following step is modification of the map and or the image based on focal length (900), and based on aperture (800). The following steps are further defined in Figure 9 and Figure 8 respectively. Following these two steps (800 and 900) the image and the Dust Map are considered to be correlated. The correlated map cM is no longer binary because it defines both the shift and the fall off which is continuous. Figure 4A (400) defines the process of detecting and removing the dust from the image. The input which is the image I is loaded, if it is not already in memory (404) and the correlated dust map is cM is loaded (402) if already not in memory.

The process of detecting and removing the dust is done per each dust spec. This process is highly parallelized and can be performed as a single path over the image, or in strips. As defined and justified by the physical phenomena, the method of correcting dust artifacts is defined based on two different operations. The first is the retouching or the in-painting of regions with no data (440), or data that is close to noise which must be recreated as defined in 430 and later on in Figure 7D. The second of said correction operations is based on the tapering degradation of surrounding pixels as a function of the aperture, as illustrated in Figures 7B - 7D. Referring to the image enhancement portions, where the data exists but most likely not in its full form, due to the fact that some of the dust affects the quality of the image, but some regions still contain some data (420), an image enhancement algorithm is performed on the pixels (430). In a simplified embodiment (432), assuming that the optical model is simplified to a degradation in the overall brightness as defined by the OPACITY, the enhanced pixels will receive a value inversely related to the OPACITY i.e. (432)

$$I'(x, y) = \frac{I(x, y)}{OPACITY}$$

To maintain a check of the validity of the model, the pixels before being operated on may be send for validation (500) as described in Figure 5. The second portion of the image correction is the restoration or the in-painting (450). In this case, the area behind the dust has no relevant data to enhance, or if there is, this data is relatively close to the overall noise level and thus can not be enhanced. Therefore, it is necessary to in-paint every pixel based on an analysis of the surrounding region to the dust (470). In the case where the enhancement regions as defined in block 430 are of good quality, those pixels as well may contribute to the in-painting.

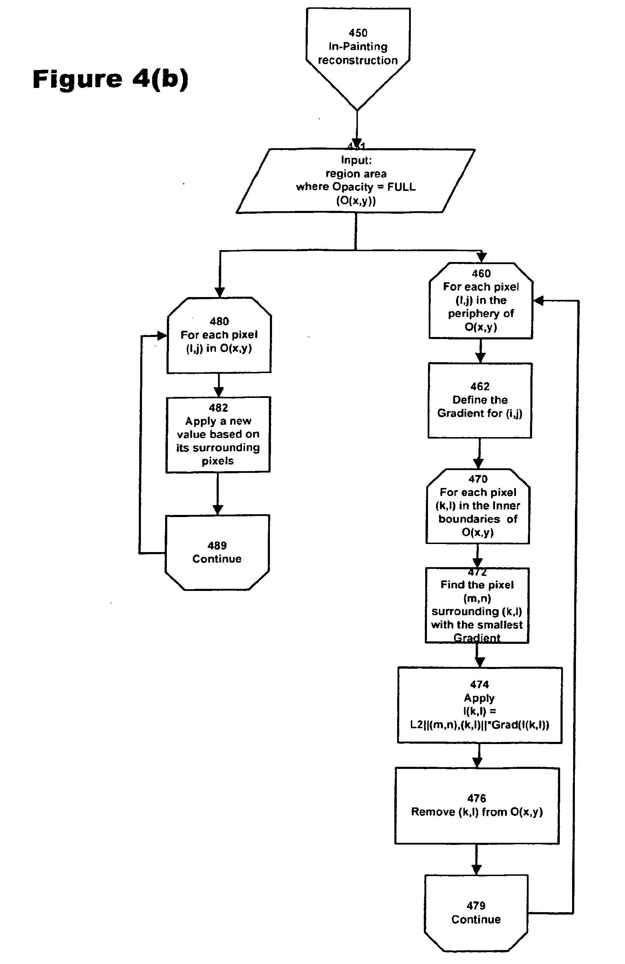

Figure 4B illustrates a certain embodiment of the in-painting process. In general, each pixel in the obscured region, 480, is to be filled, 482, based on its surrounding pixels. In this specific embodiment, the pixels are filled in based on information of the surrounding non-affected pixels. This specific algorithm takes into account that pixels closer to the periphery have a better chance to be anticipated by the external pixels. Therefore the in-painting proceeds from the outside inwards, typically on a spiral path.

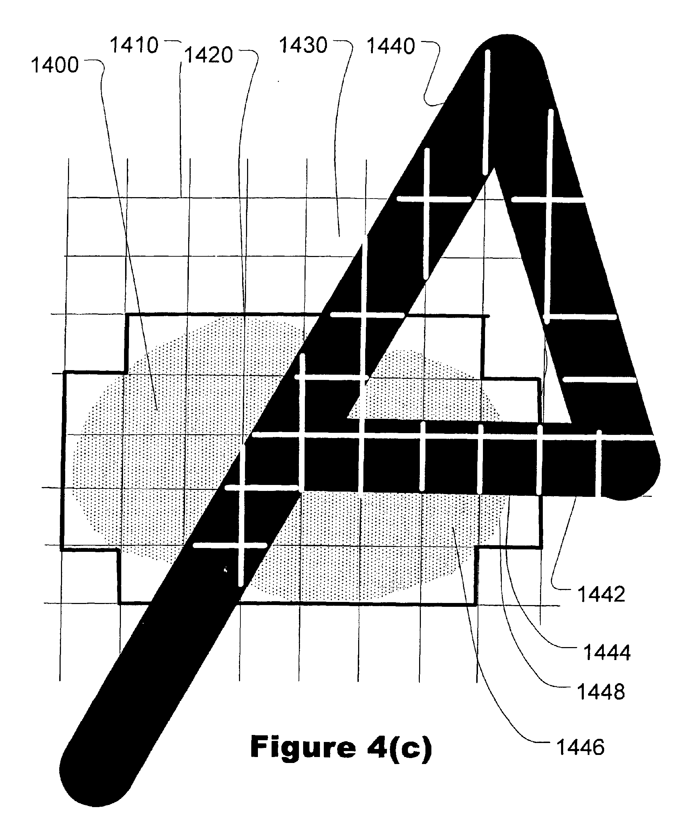

This process of spiraling inwards is also depicted in Figure 4C. In it, given a dust spec 1400 in a grid 1410 the dust is taken a digital form, of the surrounding bounding area 1420. External pixels such as 1430 are not part of the dust region, while internal ones such as 1446, 1448 or 1450 are.

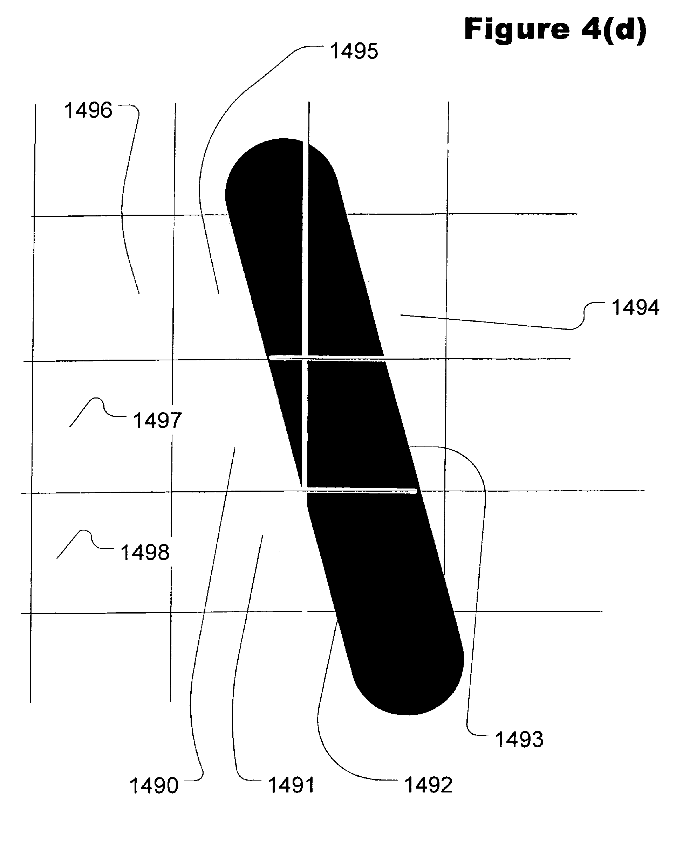

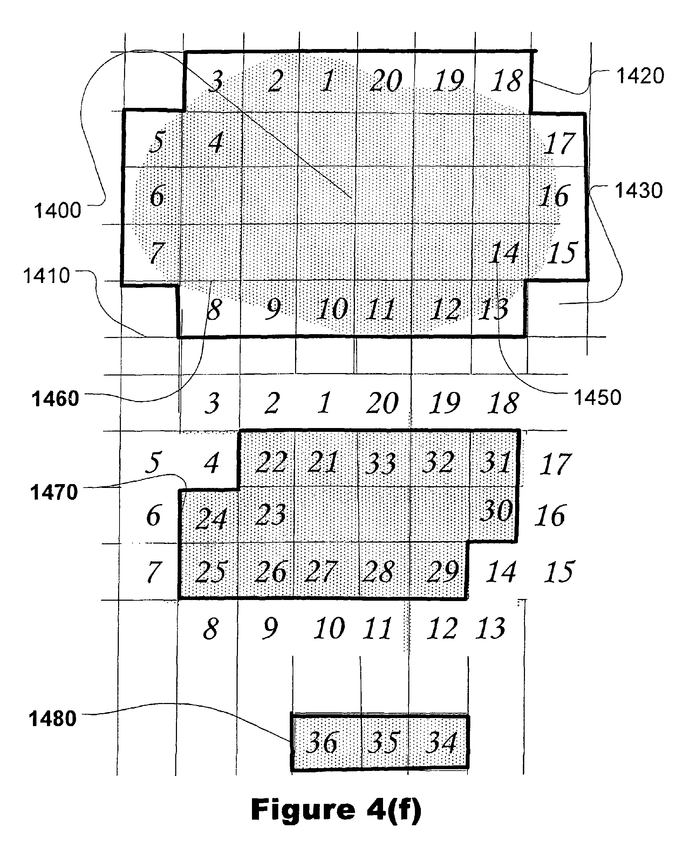

An algorithm that works on the periphery moving inwards, as defined in Figure 4B blocks 470 is depicted in Figure 4D as follows: In the first step all peripheral pixels, numbered from 1 to 20 are being operated on as defined in Figure 4B, block 474. After that, all of the above mentioned twenty pixels, as defined in Figure 4F Block 1460 are removed, according to block 476 of Figure 4B, from the region leaving a smaller dust spec of shape 1470. This modified dust spec, has a different set of peripheral pixels numbered 21-33. After removing those pixels by the in painting process, block 476, a smaller dust kernel as depicted in 1480 is left with only three pixels 34, 35 and 36. The process of filling in the pixels need not be spiral. In a different alternative, the process follows the pattern of the region surrounding the dust. For example lines and edges, or other high frequency information are being filled in prior to filling in the smooth regions. This approach will prevent unnecessary blurring due to the in-painting process. The criteria for locating pixels containing such high frequency data can be based on a determination of the overall gradient around a pixel, 462. The justification is that in the case of a steep edge, it is not advisable to copy information for the surrounding pixels with the edge value. By doing so, the in painting process will maintain any high frequency information in the picture such as lines and edges.

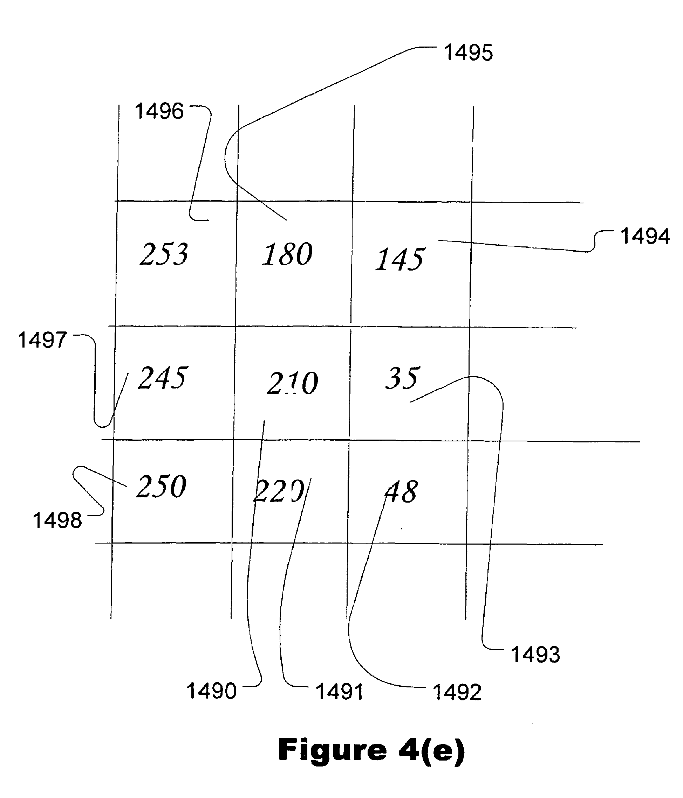

An illustration of this is given in figures 4C, 4D and 4E. Referring to figure 4C, the same dust 1400 as in figure 4F with the bounding box 1420 on a grid 1410 is obscuring a picture including high frequency data such as the letter A, 1440. Take a small section based on 9 pixels as depicted in figure 4D where pixel 1490 is surrounded by 8 pixels 1491, 1492, 1493, 1494, 1495, 1496, 1497, 1498. In a simplification, each pixel receives the average value between the black and white regions. This is depicted in figure 4e. In this case, the pixels 1490 and its surrounding 8 pixels 1491, 1492, 1493, 1494, 1495, 1496, 1497, 1498 have a digital value of 210, 220, 48, 35, 145, 180, 253, 245 and 250 respectively. It is clear that the best value of pixel 1490 will come form its surrounding pixels with the smallest gradient. Because in practice the value of pixel 1490 can not be determined, but is the center of the in painting, the value of the gradient will be based on the value of the gradients of the pixels around it and extrapolated to this pixel. In this specific example, the differential horizontal gradient between pixels 1497 and 1493, is the largest while the vertical gradient of 1495 and 1491 will most likely be the same. Therefore, a preferred value of 210 will be based on the extrapolated average of the two gradients of its top and bottom pixels.

Figure 5 describes a tool that may be used in various stages of the process, namely quality control. This process can be called from the main workflow (Figure 1) the creation of the dust map (Figures 2A and 2B) or the image restoration and enhancement (Figure 4A and 4B respectively). The purpose of this tool is to perform the necessary quality check to assure that pixels will not be wrongly classified, nor mistakenly corrected.

As examples of the principle categories of tests that may be performed as part of the quality control process we cite:

(i) in a small aperture the region behind the dust should be close to if not totally obscured; if this is not the case (530 NO), then the dust map may need to be reviewed (550); or the image may not be correctly correlated to the dust map. (This can happen when the image is from a different time, or from a different acquisition device. In this case, the software will create a new dust map (200) to correspond to the new dust or lack thereof, or inform the user that it can not correct this image.)

(ii) In the case where there is not enough information (530 MAYBE), there is no conclusive evidence to reject the correlation and thus the process continues (580) with no corrective action.

(iii) In the case that the image displays information that may concur with the dust map, the software may continue (580) or prior to that, enhance the likelihood in the dust map (200) that the region is indeed dust.

Figure 8 describes the adjustment of the dust map to the image acquisition parameters based on the aperture. Simplifying, the more closed the aperture is, the crisper and more noticeable the dust is. In other words, for example images taken with an f-stop of f-32, the dust will be very prominent and opaque, while the same image taken at f-2.8 may display no visual degradation of the image.

The correction of the image should take that information into account, to prevent over-correction of the dust artifact.

The acquisition information and the corresponding dust map default setup are extracted in blocks 326 and 312 respectively. Then, for each dust spec in the map 810, the size of the region that is still obscured by the dust is calculated, as defined by the mathematical model. In some cases, when the aperture is very open, this region may decline to 0. In others, where the aperture is almost fully closed, the size may be close to the size of the dust. Alternatively, this step, 820, may be implemented as part of a preparation step, and recorded in a database, or LUT.

The process then splits in two. The fully obscured region will be marked in 834 pixel by pixel 832 in a loop 834, 835 and will be treated by the in-painting process as defined in Figure 4B. A semi opaque dust map, is created in the loop 840, 841 for each pixel. Each of the pixels 842, is assigned an OPACITY value 844, based on the mathematical model as described previously in Figures 7A-7E. A dust spec that is only partially attenuated will go through a inverse filtering of the image data within a region of the image corresponding to said dust spec, as described in Figure 4 block 430, with a specific embodiment in block 432. This inverse filtering process may take into account the signal to noise ratio to avoid enhancing data which is not part of the original image. For example, the region around the dust may have an over-shoot similar to a high pass filter, which may manifest itself in the form of an aura around the dust. This aura should to be taken into account before enhancing the regions.

Figure 9 describes the adjustment of the Dust Map based on the Focal length, and the specific lens. The scientific background is explained in figures 6F,7F. As described before, the spatial shift of a dust spec as a function of focal length for a specific lens is a function of (equation 11) the thickness of the window- tw, which is constant for a given camera, and exit pupil position, Pe, which varies based on the lens system and a variable focal length in the case of case of a zoom lens. Given an image and a dust map, the pertinent information is loaded, as described in Figure 3, namely the focal lens and lens type of the camera, 326, the focal length and lens type in the dust map 312 and the camera distance of dust to the sensor 318. The process then goes through all known dust specs in the map 910 and calculates the shift of the dust as explained in figure 6E, 6F. The coordinates of the center pixel of a dust spec are calculated from the center of the optical path, 922, and the corresponding shift of the equivalent dust region on the image is calculated 924. Moreover, because the shift is a function of the location (x,y) of the dust the dust shape may also need to be transformed.

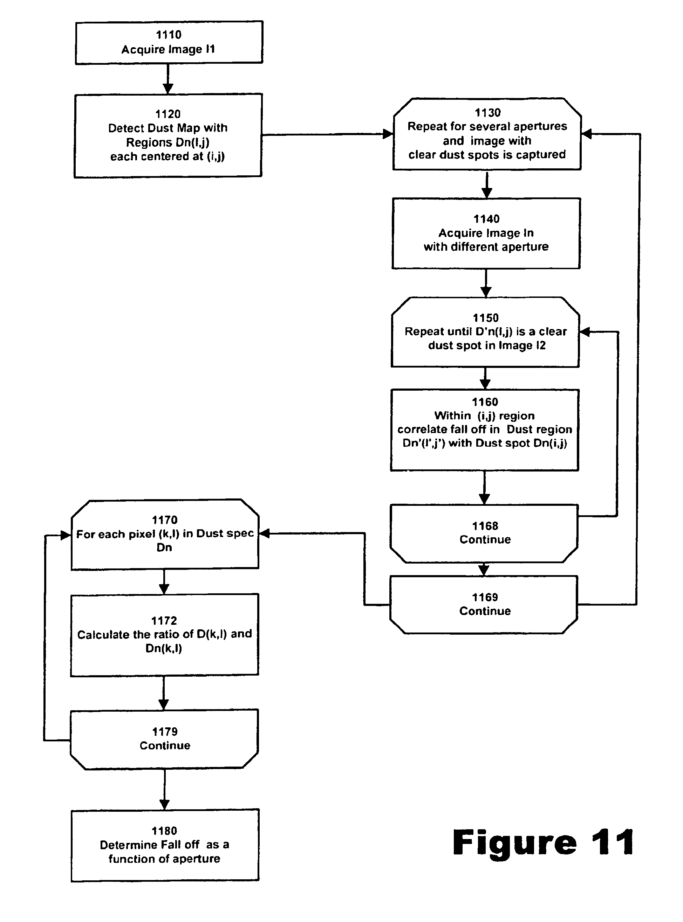

In some cases, it is impossible to get the data on the exit pupil, nor the distance the dust is from the sensor. Such cases may be when the application has no a-priori knowledge of the camera or the lens that was used. It is still possible in those cases to create a reasonable dust map, by empirically reconstructing the parameter based on analysis of the images, the shift in the dust and the falloff of the dust edges. Such techniques are defined in Figure 10 and 11 defining the process of estimating, based on empirical data, the values of the parameters in the formulae that defines the change in dust as a function of a change in aperture. Figure 10 defines the process of creating the mathematical formulae based on empirical data to parameterize the change in dust as a function of change in focal length. In general, a proposed embodiment relies on the fact that when a dust is found, a pattern matching can be applied to find the shift in the dust. Based on this information, $\dfrac{t_w}{P_e}$ can be calculated as defined in Equation 11-a. If $t_w$ is known then Pe can be calculated as recited in equation 11-b. Specifically, in a preferred embodiment, an image is acquired, 1010 and a dust map is calculated 1012. A second image is captured, 1030 with a different focal length than the first image, and a dust map is calculated 1012. The process repeatedly tries to find two dust spots in the two dust maps 1040. If no dust specs are correlated the process is repeated for consecutive images, 1020. The process of finding dust specs is calculated by applying a local correlation to each of the dust specs. Preferably, based on Equation 11-a, the further the dust is from the center, the better the precision is. When two specs are determined to be from the same dust spec the disparity between the specs is calculated 1042. The ratio between the shifted pixels is calculated. This ratio is the numerical empirical estimation of $t_w/P_e$ in equation 11-a. Moreover, if the distance of the dust to the sensor is known, the Exit pupil of the lens can be calculated based on the same equation.

Figure 11 defines the process of estimating based on empirical data the values of the parameters in the formulae that defines the change in dust as a function of change in aperture The process is similar to the one described for estimation of the focal length, albeit the fact that the parameters calculated are different. Specifically, a first image is acquired, 1110 and dust is detected, 1120 in this image. If the image is not appropriate for detecting the dust, or if the probability is low for the dust regions, this image is rejected for this purpose and another image is chosen. For the empirical comparison, a second image is captured 1140, or alternatively a set of images 1130, all with varying aperture, to enable acceptable sampling set. The process then looks for a detected dust region with high level of probability. In the case that all other parameters are similar except the aperture, the process can search for dust regions in the same coordinates that the original image dust regions were found. The dust regions of the two or more images are correlated, 1160. The process continues for a sufficient amount of dust regions, 1168, which in some cases can even be a single one, and sufficient amount of images, 1169, which can also be, depending on the confidence level, a single image. Once the dust regions are correlated 1160, the fall off due to the change of aperture is calculated, 1172, on a pixel by pixel basis, 1170, for every pixel in a dust region, 1179. Based on this information, the fall off function is calculated. 1180. In a preferred embodiment, the fall off function is determined as a function of the distance of a pixel from the periphery of the dust, as well as the aperture.

Alternatively, the dust specs may also be determined by trying to correlate the dust spec in the map to the acquired image. Such correlation can be performed within a reasonable window size or even on the diagonal line between the dust and the center of the optical path, in the direction that the dust may move. By gaining knowledge on the movement of a single dust spec, as explained in formulae 11-a, all other dust specs shift can be determined. It is also possible to determine whether the camera should be physically cleaned based on analysis of the dust in the camera and the specific dust patterns. This is illustrated in the flowchart of figure 12. An example will be that certain width of dust will not allow correct in-painting based on the surround. Another example will be the overall number of dust specs or the overall relative area that the dust covers. The input for such analysis is a dust map, 1200. This map can be similar to the dust map generated in block 200, or any other representation of a dust map or a calibration map, generated automatically or manually by the photographer. Such analysis need not be performed for every image. A process, 1260 determines whether to perform such analysis. Examples to trigger this process are the time since the last analysis, change of lenses, which may create the introduction of dust, or a message from the quality control analysis of the dust map, as defined in Figure 5 block 500, that the dust has shifted or that the dust no longer corresponds to the map. In general, any changes in the dust structure may be a justification to trigger the analysis process. When no analysis is desired, 1262, the process terminates. Otherwise, the analysis is performed, 1270. The analysis is performed for each dust spec individually, 1272, and then the results are accumulated for the whole image. For each dust region, 1273, some parameters are extracted, including, but not limited to the area of a dust region; maximum width of a dust region; the distance between dust regions and neighboring regions; the relative movement of dust regions from the last analysis; the occurrence of new dust specs since the last analysis, etc. Following this analysis, the results are statistically analyzed and summarized to include such data as - the nmber of dust specs, the area of dust, in size and in percentage for the entire image; the largest width of dust; the largest area of a dust spec; changes in area of dust since last analysis and changes of dust particles since last analysis. In an alternate embodiment, either automatically or based on the photographers preference, this analysis may be displayed or saved in a log file for future reference, 1221. Each of the aforementioned criteria may have at least one acceptable threshold value. This threshold value is determined empirically by the manufacturer in terms of the maximum acceptable dust that can be corrected in software. Alternatively, this data may be adjusted to by the photographer based on their tolerance level for dust artifacts. If any of the parameters exceeds an acceptable threshold, the user is informed, 1290, that the camera should be manually maintained and cleaned.

Alternatively, 1285, this same process may be used as a tool to inform the user of changes in the dust. Such information is particularly important in the case that the dust correction algorithm is based on the creation of a calibration image. In this case, the analysis will be used to inform the user that a new calibration image should be acquired to support the correction of dust in future images.

Alternatively, the process of analysis described above may also be incorporated in a maintenance procedure, where the camera, after being cleaned up will perform an auto-test, as described in Figure 12, to verify that the camera now is indeed clean. In such cases, the threshold parameters are of course substantially more restrictive and demanding, to assure high quality maintenance.

There are many alternatives to the preferred embodiments described above that may be incorporated into a image processing method, a digital camera, and/or an image processing system including a digital camera and an external image processing device that may allow the present invention to be practiced advantageously in certain embodiments. In a camera application, the unique location of the actual dust relative to the object and to the image plane provide information about extracted parameter-dependent characteristics of dust artifact in the images. It is possible to make determinations as to where the dust actually is in the system by analyzing multiple images taken with different extracted parameters, e.g., on the sensor window, or in an image of an original object which itself is being imaged such as in film imaging. Techniques may be also employed involving correcting for dust defects based on the geometry of said dust or of the camera. Further techniques may involve utilizing camera metadata to enhance the detection and correction processes for defects. A method may include analyzing the images in comparison to a predetermined dust map to establish the validity of the dust over progressions of time. The method may further involve mapping the acquired image to a predetermined default acquisition condition as a function of the lens type and the focal length that was used at acquisition.

A method may further include mapping a dust spec as depicted in the dust map and the suspected dust specs in the acquired image based on a calculated transformation of the dust as a function of the lens and the aperture, or other extracted parameters used to acquire the image. A dust detection and/or correction technique may be applied post priori to a collection of images, or individually to images as they are added to a collection. The map may be generated a priori to the introduction of an image, or dynamically and in concurrence to the introduction of new images. The method may further include steps of providing a statistical confidence level as to the fact that a certain region is indeed part of a dust spec. The method may further provide tools to determine whether the acquisition device may benefit from some maintenance.

A method of automatically determining whether to recommend servicing a digital image acquisition system including a digital camera based on dust analysis may be advantageously employed. In addition, in methods that may be performed according to preferred embodiments herein, the operations have been described in selected typographical sequences. However, the sequences have been selected and so ordered for typographical convenience and are not intended to imply any particular order for performing the operations, unless a particular ordering is expressly provided or understood by those skilled in the art as being necessary.

## Claims

1. A method of automatically correcting dust artifact regions within images acquired by a digital acquisition device including an optical system, comprising:

    (a) digitally-acquiring a plurality of original images with said digital acquisition device;
    (b) determining that certain pixels correspond to dust artifact regions within said digitally-acquired images;
    (c) associating the dust artifact regions with one or more extracted parameters relating to the optical system when said images were acquired, a value of at least one extracted parameter for one of said images being different from a corresponding value of at least one other image of said images;
    (d) forming a dust map based on said dust artifact regions;
    (e) correcting pixels corresponding to dust artifact regions within a present image based on the dust map

    **characterized in that**:

    said forming a dust map comprises forming a common statistical dust map by mapping dust regions within respective original images according to a selected value of at least one extracted parameter to probability values in said statistical dust map common to said plurality of images.

2. The method of claim 1, the dust artifact determining operation including:

    (i) loading the common statistical dust map;
    (ii) loading extracted parameter information of a present image; and
    (iii) correlating the common statistical dust map with the present image according to a selected value of at least one extracted parameter for the present image.

3. The method of claim 2, the extracted parameter information including values of aperture size, focal length, magnification, lens type, lens assembly type, aperture position, distance of the actual dust object from one or more positions in plane of the electronic sensor array or combinations thereof.

4. The method of claim 2, the method further comprising determining that sufficient disparity exists between dust artifact determinations within sequential images to determine that the digital acquisition device may have been cleaned and that the dust artifact determinations prior to the cleaning will not be used in the dust map.

5. The method of claim 2, the correcting comprising in-painting or restoration, or both.

6. The method of claim 5, the in-painting operation being performed on pixels determined to have substantially no image-relevant spectral information, or insufficient image-relevant spectral information, associated with their corresponding data.

7. The method of claim 6, the in-painting including creation of new pixel values based on characteristics of surrounding pixels to the dust region.

8. The method of claim 7, one or more characteristics of the surrounding pixels upon which said in-painting is based include the color, brightness, gradient, edge detection, noise, pattern, texture, geometry, or combinations thereof.

9. The method of claim 5, the restoration being performed on pixels determined to have sufficient image-relevant spectral information associated with their corresponding data.

10. The method of claim 9, the restoration including modifying brightness based on an inverse relationship to the opacity of the dust artifact or a brightness characteristic of the pixels within the image, or both.

11. The method of claim 10, the restoration further including enhancing color based on a present color characteristic of pixels within the image.

12. The method according to any of methods 1-11 the dust artifact determining and associating operations being repeated for further acquired images after forming said common statistical dust map; said common statistical dust map being modified based on said further images including mathematically correlating determined and associated dust artifact regions of said further acquired images with dust artifact regions in said common statistical dust map including combining data associated with dust artifact regions within images acquired with different values of one or more extracted parameters; and correcting digital data corresponding to the correlated dust artifact regions within acquired images based on said modified common statistical dust map.

13. The method of claim 12, the modifying including varying probabilities based on combining new probability data with probability data within said original dust map.

14. The method of claim 12, the modifying including eliminating a dust artifact region of said original dust map due to its probability falling below a threshold value between 0 and 1 after combining new probability data with probability data within said original dust map.

15. The method of claim 12, the modifying including inserting a new dust artifact region not present within said original dust map due to its having a probability, based on analysis of multiple images, that is now above a threshold value between 0 and 1 after combining new probability data with probability data within said original dust map.

16. The method of claim 12, further comprising reapplying said correcting digital data for images previously acquired after said modifying statistical dust map showed a better statistical probability to said one or more said detected dust regions.

17. The method of claim 12, said dust artifact regions including an aura region partially obscured by dust and a shadow region substantially obscured by dust, the shadow region being inside said aura region.

18. The method of claim 17, said determining with respect to a shadow region being based on an extracted parameter-dependent shadow region analysis, wherein the shadow region analysis presumes that certain regions on a sensor of the digital image acquisition device are fully obscured by said dust.

19. The method of claim 18, wherein the shadow region analysis includes calculating effects of differences in values of the one or more extracted parameters in different images on dust artifact illumination, shape, position, reflection or transmission properties, distance of dust to the sensor, aperture, exit pupil, or focal length, or combinations thereof.

20. The method of claim 17, said determining with respect to an aura region being based on an extracted parameter-dependent aura region analysis, wherein the aura region analysis presumes that certain regions on a sensor of the digital image acquisition device are partially obscured by said dust.

21. The method of claim 20, wherein said aura region analysis includes calculating effects of differences in values of the one or more extracted parameters in different images on dust artifact illumination, shape, position, reflection or transmission properties, distance of dust to the sensor, aperture, exit pupil, or focal length, or combinations thereof.

22. The method of claim 17, the correcting operation comprising in-painting or restoration, or both.

23. The method of claim 22, said correcting' including in-painting the shadow region and including determining and applying shadow region correction spectral information based on spectral information obtained from pixels outside said shadow region.

24. The method of claim 22, said correcting including restoration of the aura region, said restoration including determining and applying aura region correction spectral information based on spectral information obtained from pixels within said aura region.

25. The method of claim 17, the correcting operation including calculating said aura region and said shadow region, the correcting operation further including correcting a shadow region approximately based on the correcting of the aura region.

26. The method of claim 12, the statistical dust map including extracted parameter dependent-variables such that dust artifact region effects in one image are predicted to differ based upon values of the variables within the statistical dust map.

27. The method of claim 2, wherein said correlating comprises performing at least one linear transformation on the assumption of circular symmetry of the present image and a predetermined mathematical relationship between said extracted parameter and the coefficients of said linear transformation.

28. The method of claim 27 where said linear transformation comprises performing a spatial correlation of the dust artifact regions of the dust map with the present image.

29. The method of claim 28 comprising performing additional linear, transformations relating to additional properties of the dust map or the dust artifact regions contained within said dust map.

30. The method of claim 29 where said additional properties include one or more of dust map luminance, transparency, opacity, scale, dust artifact region size, luminance, transparency, opacity, scale, and spatial location relative to image center.

31. The method of any of claims 2 or 27-30, wherein said correlating further comprises performing at least one non-linear transformation based, at least in part, on predetermined data stored in a LUT relating the selected value of the extracted parameter to the coefficients of said non-linear transformation.

32. The method of claim 31 where said non-linear transformation corrects for non-circular symmetry of the present image.

33. The method of claim 31 where said non-linear transformation corrects for non-linear spatial mappings arising from the optical properties of the imaging subsystem used to acquire the present image.

**Patentansprüche**

1. Verfahren zum automatischen Korrigieren von Staubartefaktregionen in Bildern, die von einer digitalen Erfassungsvorrichtung mit einem optischen System erfasst wurden, das die folgenden Schritte beinhaltet:

   (a) digitales Erfassen mehrerer Originalbilder mit der genannten digitalen Erfassungsvorrichtung;
   (b) Feststellen, dass bestimmte Pixel Staubartefaktregionen in den genannten digital erfassten Bildern entsprechen;
   (c) Assoziieren der Staubartefaktregionen mit ein oder mehreren extrahierten Parametern in Bezug auf das optische System bei der Erfassung der genannten Bilder, wobei sich ein Wert von wenigstens einem extrahierten Parameter für eines der genannten Bilder von einem entsprechenden Wert von wenigstens einem anderen Bild der genannten Bilder unterscheidet;
   (d) Erzeugen einer Staubkarte auf der Basis der genannten Staubartefaktregionen;
   (e) Korrigieren von Staubartefaktregionen entsprechenden Pixeln in einem vorliegenden Bild auf der Basis der Staubkarte,

   **dadurch gekennzeichnet, dass**:

das genannte Erzeugen einer Staubkarte das Erzeugen einer gemeinsamen statistischen Staubkarte durch Abbilden von Staubregionen in jeweiligen Originalbildern gemäß einem gewählten Wert von wenigstens einem extrahierten Parameter auf Wahrscheinlichkeitswerte in der genannten statistischen Staubkarte beinhaltet, die den genannten mehreren Bildern gemeinsam sind.

2. Verfahren nach Anspruch 1, wobei die Staubartefaktfeststellungsoperation Folgendes beinhaltet:

(i) Laden der gemeinsamen statistischen Staubkarte;
(ii) Laden von extrahierten Parameterinformationen eines vorliegenden Bildes; und
(iii) Korrelieren der gemeinsamen statistischen Staubkarte mit dem vorliegenden Bild gemäß einem gewählten Wert von wenigstens einem extrahierten Parameter für das vorliegende Bild.

3. Verfahren nach Anspruch 2, wobei die extrahierten Parameterinformationen Werte für Blendengröße, Fokallänge, Vergrößerung, Linsentyp, Linsenbaugruppentyp, Blendenstellung, Abstand des tatsächlichen Staubobjekts von einer oder mehreren Positionen in der Ebene der elektronischen Sensormatrix oder Kombinationen davon beinhalten.

4. Verfahren nach Anspruch 2, wobei das Verfahren ferner das Feststellen beinhaltet, dass eine ausreichende Disparität zwischen Staubartefaktfeststellungen innerhalb von sequentiellen Bildern vorliegt, um festzustellen, dass die digitale Erfassungsvorrichtung möglicherweise gereinigt wurde und die Staubartefaktfeststellungen vor der Reinigung in der Staubkarte nicht benutzt werden.

5. Verfahren nach Anspruch 2, wobei das Korrigieren Einfärben oder Restaurieren oder beides beinhaltet.

6. Verfahren nach Anspruch 5, wobei das Einfärben an Pixeln erfolgt, bei denen festgestellt wurde, dass sie im Wesentlichen keine bildrelevanten Spektralinformationen oder ungenügend bildrelevante Spektralinformationen in Verbindung mit ihren entsprechenden Daten haben.

7. Verfahren nach Anspruch 6, wobei das Einfärben das Erzeugen neuer Pixelwerte auf der Basis von Charakteristiken von Umgebungspixeln zu der Staubregion beinhaltet.

8. Verfahren nach Anspruch 7, wobei zu den ein oder mehreren Charakteristiken der Umgebungspixel, auf denen das genannte Einfärben basiert, Farbe, Helligkeit, Gradient, Randerkennung, Rauschen, Muster, Textur, Geometrie oder Kombinationen davon gehören.

9. Verfahren nach Anspruch 5, wobei die Restauration an Pixeln erfolgt, bei denen festgestellt wurde, dass sie genügend bildrelevante Spektralinformationen in Verbindung mit ihren entsprechenden Daten haben.

10. Verfahren nach Anspruch 9, wobei die Restauration das Ändern der Helligkeit auf der Basis einer Umkehrbeziehung an der Opazität des Staubartefakts oder einer Helligkeitscharakteristik der Pixel in dem Bild oder beides beinhaltet.

11. Verfahren nach Anspruch 10, wobei die Restauration ferner das Verbessern von Farbe auf der Basis einer vorliegenden Farbcharakteristik von Pixeln in dem Bild beinhaltet.

12. Verfahren nach einem der Ansprüche 1-11, wobei die Staubartefaktfeststellungs- und -assoziierungsoperationen für weitere erfasste Bilder nach dem Bilden der genannten gemeinsamen statistischen Staubkarte wiederholt werden; wobei die genannte gemeinsame statistische Staubkarte auf der Basis der genannten weiteren Bilder modifiziert wird, inklusive des mathematischen Korrelierens bestimmter und assoziierter Staubartefaktregionen der genannten weiteren erfassten Bilder mit Staubartefaktregionen in der genannten gemeinsamen statistischen Staubkarte, inklusive des Kombinierens von Daten in Verbindung mit Staubartefaktregionen in Bildern, die mit unterschiedlichen Werten von ein oder mehreren extrahierten Parametern erfasst werden; und Korrigieren von digitalen Daten, die den korrelierten Staubartefaktregionen in erfassten Bildern entsprechen, auf der Basis der genannten modifizierten gemeinsamen statistischen Staubkarte.

13. Verfahren nach Anspruch 12, wobei das Modifizieren das Variieren von Wahrscheinlichkeiten auf der Basis des Kombinierens neuer Wahrscheinlichkeitsdaten mit Wahrscheinlichkeitsdaten in der genannten ursprünglichen Staubkarte beinhaltet.

14. Verfahren nach Anspruch 12, wobei das Modifizieren das Herausnehmen einer Staubartefaktregion aus der genannten ursprünglichen Staubkarte beinhaltet, da ihre Wahrscheinlichkeit nach dem Kombinieren neuer Wahrscheinlichkeitsdaten mit Wahrscheinlichkeitsdaten in der genannten ursprünglichen Staubkarte unter einen Schwellenwert zwischen 0 und 1 fällt.

**15.** Verfahren nach Anspruch 12, wobei das Modifizieren das Einfügen einer neuen Staubartefaktregion beinhaltet, die in der genannten ursprünglichen Staubkarte nicht enthalten ist, da auf der Basis einer Analyse mehrerer Bilder ihre Wahrscheinlichkeit nach dem Kombinieren neuer Wahrscheinlichkeitsdaten mit Wahrscheinlichkeitsdaten in der genannten ursprünglichen Staubkarte jetzt über einem Schwellenwert zwischen 0 und 1 liegt.

**16.** Verfahren nach Anspruch 12, das ferner das erneute Anwenden des genannten Korrigierens von digitalen Daten auf zuvor erfasste Bilder beinhaltet, nachdem das genannte Modifizieren einer statistischen Staubkarte eine bessere statistische Wahrscheinlichkeit für die genannten ein oder mehreren erfassten Staubregionen zeigte.

**17.** Verfahren nach Anspruch 12, wobei die genannten Staubartefaktregionen eine Auraregion beinhalten, die teilweise von Staub verdeckt wird, und eine Schattenregion, die im Wesentlichen von Staub verdeckt wird, wobei sich die Schattenregion innerhalb der genannten Auraregion befindet.

**18.** Verfahren nach Anspruch 17, wobei das genannte Bestimmen mit Bezug auf eine Schattenregion auf einer vom extrahierten Parameter abhängigen Schattenregionsanalyse basiert, wobei die Schattenregionsanalyse davon ausgeht, dass bestimmte Regionen auf einem Sensor der digitalen Bilderfassungsvorrichtung von dem genannten Staub völlig verdeckt werden.

**19.** Verfahren nach Anspruch 18, wobei die Schattenregionsanalyse das Berechnen von Auswirkungen von Wertedifferenzen zwischen den ein oder mehreren extrahierten Parametern in unterschiedlichen Bildern auf Staubartefaktbeleuchtung, Form, Position, Reflexions- oder Durchlässigkeitseigenschaften, Abstand von Staub von dem Sensor, Blende, Austrittspupille oder Fokallänge oder Kombinationen davon beinhaltet.

**20.** Verfahren nach Anspruch 17, wobei das genannte Bestimmen mit Bezug auf eine Auraregion auf einer vom extrahierten Parameter abhängigen Auraregionsanalyse basiert, wobei die Auraregionsanalyse davon ausgeht, dass bestimmte Regionen auf einem Sensor der digitalen Bilderfassungsvorrichtung von dem genannten Staub teilweise verdeckt werden.

**21.** Verfahren nach Anspruch 20, wobei die genannte Auraregionsanalyse das Berechnen von Auswirkungen von Wertedifferenzen zwischen den ein oder mehreren extrahierten Parametern in verschiedenen Bildern auf Staubartefaktbeleuchtung, Form, Position, Reflexions- oder Durchlässigkeitseigenschaften, Abstand von Staub vom Sensor, Blende, Austrittspupille oder Fokallänge oder Kombinationen davon beinhaltet.

**22.** Verfahren nach Anspruch 17, wobei der Korrekturvorgang Einfärben oder Restauration oder beides beinhaltet.

**23.** Verfahren nach Anspruch 22, wobei das genannte Korrigieren das Einfärben der Schattenregion sowie das Bestimmen und Anwenden von Schattenregionskorrektur-Spektralinformationen auf der Basis von Spektralinformationen beinhaltet, die von Pixeln außerhalb der genannten Schattenregion gewonnen wurden.

**24.** Verfahren nach Anspruch 22, wobei das genannte Korrigieren das Restaurieren der Auraregion beinhaltet, wobei das genannte Restaurieren das Bestimmen und Anwenden von Auraregionskorrektur-Spektralinformationen auf der Basis von Spektralinformationen beinhaltet, die von Pixeln in der genannten Auraregion erhalten wurden.

**25.** Verfahren nach Anspruch 17, wobei der Korrekturvorgang das Berechnen der genannten Auraregion und der genannten Schattenregion beinhaltet, wobei der Korrekturvorgang ferner das Korrigieren einer Schattenregion etwa auf der Basis des Korrigierens der Auraregion beinhaltet.

**26.** Verfahren nach Anspruch 12, wobei die statistische Staubkarte vom extrahierten Parameter abhängige Variablen enthält, so dass Unterschiede von Staubartefaktregionseffekten in einem Bild auf der Basis von Werten der Variablen in der statistischen Staubkarte vorhergesagt werden.

**27.** Verfahren nach Anspruch 2, wobei das genannte Korrelieren das Ausführen von wenigstens einer Lineartransformation unter der Annahme von Kreissymmetrie des vorliegenden Bildes und einer vorbestimmten mathematischen Beziehung zwischen dem genannten extrahierten Parameter und den Koeffizienten der genannten Lineartransformation beinhaltet.

**28.** Verfahren nach Anspruch 27, wobei die genannte Lineartransformation das Ausführen einer räumlichen Korrelation der Staubartefaktregionen der Staubkarte in dem vorliegenden Bild beinhaltet.

**29.** Verfahren nach Anspruch 28, das das Ausführen zusätzlicher Lineartransformationen in Bezug auf zusätzliche Eigenschaften der Staubkarte oder der in der genannten Staubkarte enthaltenen Staubartefaktregionen beinhaltet.

**30.** Verfahren nach Anspruch 29, wobei die genannten zusätzlichen Eigenschaften Staubkartenluminanz, -transparenz, -opazität, -maßeinteilung, Staubartefaktregionsgröße, -luminanz, -transparenz, -opazität, -maßeinteilung und/oder räumlichen Ort relativ zur Bildmitte beinhalten.

**31.** Verfahren nach einem der Ansprüche 2 oder 27-30, wobei das genannte Korrelieren ferner das Ausführen von wenigstens einer Nichtlineartransformation wenigstens teilweise auf der Basis von vorbestimmten in einer LUT gespeicherten Daten, die sich auf den gewählten Wert des extrahierten Parameters beziehen, an den Koeffizienten der genannten Nichtlineartransformation beinhaltet.

**32.** Verfahren nach Anspruch 31, wobei die genannte Nichtlineartransformation Nichtkreissymmetrie des vorliegenden Bildes korrigiert.

**33.** Verfahren nach Anspruch 31, wobei die genannte Nichtlineartransformation nichtlineare räumliche Abbildungen korrigiert, die aus den optischen Eigenschaften des Bilderzeugungssubsystems entstehen, das zum Erfassen des vorliegenden Bildes verwendet wird.

**Revendications**

**1.** Procédé de correction automatique de régions d'artéfacts de poussière dans des images acquises par un dispositif d'acquisition numérique comportant un système optique, comprenant :

(a) l'acquisition numérique d'une pluralité d'images d'origine avec ledit dispositif d'acquisition numérique ;
(b) la détermination que certains pixels correspondent à des régions d'artéfacts de poussière dans lesdites images acquises numériquement ;
(c) l'association des régions d'artéfacts de poussière à un ou plusieurs paramètres extraits se rapportant au système optique quand lesdites images ont été acquises, une valeur d'au moins un paramètre extrait de l'une desdites images étant différent d'une valeur correspondant d'au moins une autre image desdites images ;
(d) la formation d'une carte de poussières basée sur lesdites régions d'artéfacts de poussière ;
(e) la correction des pixels correspondant aux régions d'artéfacts de poussière dans une image courante en fonction de ladite carte de poussières

**caractérisé en ce que** :

ladite formation d'une carte de poussières comprend la formation d'une carte de poussières statistique commune en mettant en correspondance les régions de poussière dans des images d'origine respectives conformément à une valeur sélectionnée d'au moins un paramètre extrait avec des valeurs de probabilité dans ladite carte de poussières statistique commune à ladite pluralité d'images.

**2.** Procédé selon la revendication 1, l'opération de détermination d'artéfacts de poussière comportant :

(i) le chargement de la carte de poussières statistique commune ;
(ii) le chargement d'informations de paramètres extraits d'une image courante ; et
(iii) la corrélation de la carte de poussières statistique commune avec l'image courante conformément à une valeur sélectionnée d'au moins un paramètre extrait de l'image courante.

**3.** Procédé selon la revendication 2, les informations de paramètres extraits comportant des valeurs de taille d'ouverture, de distance focale, de grossissement, de type d'objectif, de type d'ensemble d'objectif, de position d'ouverture, de distance de l'objet de poussière réel par rapport à une ou plusieurs positions dans le plan du réseau de capteurs électroniques ou des combinaisons de celles-ci.

**4.** Procédé selon la revendication 2, le procédé comprenant en outre la détermination qu'une disparité suffisante existe entre les déterminations d'artéfacts de poussière dans des images séquentielles pour déterminer que le dispositif d'acquisition numérique peut avoir été nettoyé et que les déterminations d'artéfacts de poussière avant le nettoyage ne seront pas utilisées dans la carte de poussières.

**5.** Procédé selon la revendication 2, la correction comprenant une désoccultation (inpainting) ou une restauration, ou les deux.

**6.** Procédé selon la revendication 5, l'opération de désoccultation étant exécutée sur des pixels qui ont été déterminés comme n'ayant sensiblement aucune information spectrale pertinente pour l'image, ou comme ayant insuffisamment d'informations spectrales pertinentes pour l'image, associées à leurs données correspondantes.

**7.** Procédé selon la revendication 6, la désoccultation comportant la création de nouvelles valeurs de pixels basée sur les caractéristiques des pixels périphériques à la région de poussière.

**8.** Procédé selon la revendication 7, une ou plusieurs caractéristiques des pixels périphériques sur lesquelles la désoccultation est basée comportent la couleur, la brillance, le gradient, la détection de bord, le bruit, le motif, la texture, la géométrie, ou des combinaisons de ceux-ci.

**9.** Procédé selon la revendication 5, la restauration étant effectuée sur des pixels qui ont été déterminés comme ayant suffisamment d'informations spectrales pertinentes pour l'image associées à leurs données correspondantes.

**10.** Procédé selon la revendication 9, la restauration comportant la modification de la brillance basée sur une relation inverse à l'opacité de l'artéfact de poussière ou une caractéristique de brillance des pixels dans l'image, ou les deux.

**11.** Procédé selon la revendication 10, la restauration comportant en outre un rehaussement de couleur basé sur une caractéristique de couleur courante de pixels dans l'image.

**12.** Procédé selon l'une quelconque des revendications 1 à 11, les opérations de détermination et d'association d'artéfacts de poussière étant répétées pour d'autres images acquises après la formation de ladite carte de poussières statistique commune ; ladite carte de poussières statistique commune étant modifiée en fonction desdites autres images comportant la corrélation mathématique de régions d'artéfacts de poussière déterminées et associées desdites autres images acquises avec des régions d'artéfacts de poussière dans ladite carte de poussières statistique commune comportant la combinaison de données associées aux régions d'artéfacts de poussière dans des images acquises avec des valeurs différentes d'un ou de plusieurs paramètres extraits, et la correction de données numériques correspondant aux régions d'artéfacts de poussière corrélées dans les images acquises en fonction de ladite carte de poussières statistique commune modifiée.

**13.** Procédé selon la revendication 12, la modification comportant des probabilités variables basées sur la combinaison de nouvelles données de probabilité avec des données de probabilité dans ladite carte de poussières d'origine.

**14.** Procédé selon la revendication 12, la modification comportant l'élimination d'une région d'artéfact de poussière de ladite carte de poussières d'origine en raison de la chute de sa probabilité en dessous d'une valeur de seuil entre 0 et 1 après la combinaison des nouvelles données de probabilité avec des données de probabilité dans ladite carte de poussières d'origine.

**15.** Procédé selon la revendication 12, la modification comportant l'insertion d'une nouvelle région d'artéfact de poussière non présente dans ladite carte de poussières d'origine en raison de sa probabilité, basée sur l'analyse d'images multiples, qui est maintenant au-dessus d'une valeur de seuil entre 0 et 1 après la combinaison de nouvelles données de probabilité avec des données de probabilité dans ladite carte de poussières d'origine.

**16.** Procédé selon la revendication 12, comprenant en outre la réapplication de ladite correction de données numériques d'images précédemment acquises après que ladite modification de la carte de poussières statistique a montré une meilleure probabilité statistique par rapport auxdites une ou plusieurs dites régions de poussière détectées.

**17.** Procédé selon la revendication 12, lesdites régions d'artéfacts de poussière comportant une région d'aura partiellement obscurcie par de la poussière et une région d'ombre sensiblement obscurcie par de la poussière, la région d'ombre se trouvant dans ladite région d'aura.

**18.** Procédé selon la revendication 17, ladite détermination relativement à une région d'ombre étant basée sur une analyse de région d'ombre dépendant de paramètres extraits, dans lequel l'analyse de région d'ombre présume que certaines régions sur un capteur du dispositif d'acquisition d'image numérique sont totalement obscurcies par ladite poussière.

**19.** Procédé selon la revendication 18, dans lequel l'analyse de région d'ombre comporte le calcul d'effets de différences de valeurs des un ou plusieurs paramètres extraits dans différentes images sur l'éclairage, la forme, la position, les propriétés de réflexion ou de transmission de l'artéfact de poussière, la distance de la poussière par rapport au capteur, l'ouverture, la pupille de sortie, ou la distance focale, ou des combinaisons de ceux-ci.

**20.** Procédé selon la revendication 17, ladite détermination relativement à une région d'aura étant basée sur une analyse de région d'aura dépendant de paramètres extraits, dans lequel l'analyse de région d'aura présume que certaines régions sur un capteur du dispositif d'acquisition d'image numérique sont partiellement obscurcies par ladite poussière.

**21.** Procédé selon la revendication 20, dans lequel ladite analyse de région d'aura comporte le calcul d'effets de différentes de valeurs des un ou plusieurs paramètres extraits dans différentes images sur l'éclairage, la forme, la position, les propriétés de réflexion ou de transmission de l'artéfact de poussière, la distance de la poussière par rapport au capteur, l'ouverture, la pupille de sortie, ou la distance focale, ou des combinaisons de ceux-ci.

**22.** Procédé selon la revendication 17, l'opération de correction comprenant une désoccultation ou une restauration, ou les deux.

**23.** Procédé selon la revendication 22, ladite correction comportant la désoccultation de la région d'ombre et comportant la détermination et l'application d'informations spectrales de correction de région d'ombre basées sur des informations spectrales obtenues de pixels situés en dehors de ladite région d'ombre.

**24.** Procédé selon la revendication 22, ladite correction comportant la restauration de la région d'aura, ladite restauration comportant la détermination et l'application d'informations spectrales de correction de région d'aura basées sur des informations spectrales obtenues de pixels dans ladite région d'aura.

**25.** Procédé selon la revendication 17, l'opération de correction comportant le calcul de ladite région d'aura et de ladite région d'ombre, l'opération de correction comportant en outre la correction d'une région d'ombre basée approximativement sur la correction de la région d'aura.

**26.** Procédé selon la revendication 12, la carte de poussières statistique comportant des variables dépendant de paramètres extraits permettant de prédire que des effets de régions d'artéfacts de poussière dans une image différeront en fonction des valeurs des variables dans la carte de poussières statistique.

**27.** Procédé selon la revendication 2, dans lequel ladite corrélation comprend l'exécution d'au moins une transformation linéaire en supposant une symétrie circulaire de l'image courante et une relation mathématique prédéterminée entre ledit paramètre extrait et les coefficients de ladite transformation linéaire.

**28.** Procédé selon la revendication 27, dans lequel ladite transformation linéaire comprend l'exécution d'une corrélation spatiale des régions d'artéfacts de poussière de la carte de poussières avec l'image courante.

**29.** Procédé selon la revendication 28, comprenant l'exécution des transformations linéaires supplémentaires relatives à des propriétés supplémentaires de la carte de poussières ou aux régions d'artéfacts de poussière contenues dans ladite carte de poussières.

**30.** Procédé selon la revendication 29, dans lequel lesdites propriétés supplémentaires comportent l'une ou plusieurs des luminance, transparence, opacité, échelle de la carte de poussières, taille, luminance, transparence, opacité, échelle et emplacement spatial par rapport au centre de l'image des régions d'artéfacts de poussière.

**31.** Procédé selon l'une quelconque des revendications 2 ou 27 à 30, dans lequel ladite corrélation comprend en outre l'exécution d'au moins une transformation non linéaire basée, au moins en partie sur des données prédéterminées mémorisées dans une LUT qui relie la valeur sélectionnée du paramètre extrait aux coefficients de ladite transformation non linéaire.

**32.** Procédé selon la revendication 31, dans lequel ladite transformation non linéaire corrige la symétrie non circulaire de l'image courante.

**33.** Procédé selon la revendication 31, dans lequel ladite transformation non linéaire corrige les mises en correspondance spatiales non linéaires découlant des propriétés optiques du sous-système d'imagerie utilisé pour acquérir l'image courante.

Figure 1

**Figure 2(a)**

YES ← **220** If number of images is more than hdp → NO → **240** If function called with a single image

**230** Sample Images in a sequence to create an image schedule

MULTIPLE IMAGES

**250** Schedule = number of images

**200** Dust Map Creation/ Updating

**260** For each Image (I) in the schedule

**300** Correlate Map and/or Image to Shooting Conditions

SINGLE IMAGE

**270** If all dust regions have p(Hdp) and all non dust regions have p(Ndp) and all image is covered

NOT YET

**282** Mark regions with high probability as non dust (ND)

**292** Mark regions potentially dust (YD)

**271** Continue

**296** Cluster Dust Pixels into Dust Specs

**284** Add non-dust regions to the map based on f(ndp)

**294** Add dust regions to the map based on f(hdp)

Continue loop for each image

**273** Continue

YES

**272** Alternative

**296** Cluster Dust Pixels into Dust Specs

**500** Perform Quality Control of Dust Map

**298** Exit and return in case of a single image

28

EP 1 668 886 B1

## Figure 2(b)

**1210  Preparation of Dust Map pM**

**1212**
If pM Exists

**1214**
Create NEW pM
with all pixels
(x,y) = WHITE

**1216**
Open pM

**300**
Correlate Map
and/or Image to
Shooting
Conditions

**1220 CREATE TRINARY  DUST MAP I-dM**

**1222**
For All Pixels (x,y)  in I

**1224**

Case
Luminance(I(x,y))

< DARK_THRESHLOD          I-dM (X,Y) = MAYBE_DUST
> WHITE_THRESHLOD        I-dM(x,y) = WHITE PIXEL
OTHERWISE                      I-dM(x,y) = DON'T_KNOW

**1223**
Continue

**1296   CREATE TRINARY  DUST MAP I-pM
AFTER CLUSTERING**

**1232**
For All Pixels (x,y)  in I-pm

**1234**
if I-pM(x,y) E DUST_REGION    I-pM(x,y)  = DUST
I-pM(x,y) E  LARGE_REGION    I-pM(x,y)  =
MAYBE
I-pM(x,y) = WHITE_PIXEL        I-pM(x,y) = WHITE

**1233**
Continue

**1250    CREATE BINARY DUST MAP pM**

**1252**
For All Pixels (x,y)  in dM

**1254**
IF (dM(x,y) <  DUST_THRESHOLD

**1256**
pM (x,y) = YES

**1253**
Continue

**1299**
Exit

**1240  CREATE CONTINUOUS  DUST MAP dM**

**1242**
For All Pixels (x,y)  in I-pM

**276**
CASE:
I-pM(x,y)   = MAYBE

I-pM(x,y)   = WHITE

I-pM(x,y)   = DUST_REGION

**1294**
dM(x,y) = -=QUANTA

**1284**
dM(x,y) = WHITE

**1244**
dM(x,y) = Unchanged

**1243**
Continue

29

**Figure 3**

```
                          ┌─────────────────┐
                          │       300       │
                          │  Correlate Map  │
                          │ and/or Image to │
                          │    Shooting     │
                          │   Conditions    │
                          └─────────────────┘
         ┌──────────────────────────┴──────────────────────────┐
┌─────────────────┐                                  ┌─────────────────┐
│       304       │                                  │       112       │
│      Load       │                                  │      Load       │
│  Image Header   │                                  │    Dust Map     │
│        I        │                                  │       pM        │
└─────────────────┘                                  └─────────────────┘
         │                                                    │
┌─────────────────┐                                  ┌─────────────────┐
│       320       │                                  │       310       │
│     Extract     │                                  │     Extract     │
│    Shooting     │                                  │    Shooting     │
│   Parameters    │                                  │   Parameters    │
│   From Image    │                                  │    From Map     │
└─────────────────┘                                  └─────────────────┘
     ┌──────┴─────────┐                          ┌───────────┴────────┐
```

| 328 Extract Image Apperture | 326 Extract Image Lens and Focal Length | 318 Load Camera distance of dust to sensor | 312 Load Dust Map Lens and Focal Length | 314 Load Dust Map Aperture |

```
                  └───────────────┬──────────────┘
                          ┌─────────────────┐
                          │   900   Adjust  │
                          │  Dust map/ Image│
                          │  Based on Focal │
                          │     Length      │
                          └─────────────────┘
                                  │
                          ┌─────────────────┐
                          │       800       │
                          │ Adjust Dust Map │
                          │    / Image      │
                          │    Based on     │
                          │    Aperture     │
                          └─────────────────┘
                                  │
                          ┌─────────────────┐
                          │       398       │
                          │  Return to main │
                          │  with correlated│
                          │   dust map cM   │
                          └─────────────────┘
```

**Figure 4(a)**

**Figure 4(b)**

450
In-Painting
reconstruction

451
Input:
region area
where Opacity = FULL
(O(x,y))

480
For each pixel
(I,j) in O(x,y)

482
Apply a new
value based on
its surrounding
pixels

489
Continue

460
For each pixel
(I,j) in the
periphery of
O(x,y)

462
Define the
Gradient for (i,j)

470
For each pixel
(k,l) in the Inner
boundaries of
O(x,y)

472
Find the pixel
(m,n)
surrounding (k,l)
with the smallest
Gradient

474
Apply
I(k,l) =
L2||(m,n),(k,l)||*Grad(I(k,l))

476
Remove (k,l) from O(x,y)

479
Continue

**Figure 4(c)**

**Figure 4(d)**

**Figure 4(e)**

**Figure 4(f)**

**Figure 5**

**500**
Perform
Quality Control
of Dust Map

**510**
For all pixels in
Image I
corresponding to
the dust map dM

**300**
Correlate Map
and/or Image to
Shooting
Conditions

**520**
Find
Corresponding
region in the
image

**530**
Is regions potentially
dust

NO

MAYBE

YES

**540**
Increase lielihood
that region is of
dust nature

**550**
Send region
information to
Dust-Map
Update

**580**
Continue

## Figure 6A

## Figure 6B

## Figure 6C

646 — Secondary pricipal plane

644

Focal distance

642

Exit pupil distance

# Figure 6D

Exit pupil

Secondary principal plane

h0    h

f'

$^x P_e$

$P_e$

$t_w$

# Figure 6E

## Figure 6F

S$_C$

Intersection of the
cone beam converging
to the image point

Dust particle

S$_D$

S1

S2

S3

## Figure 7A

**Figure 7B**

**Figure 7C**

*f 9*

# Figure 7D

*f 32*

# Figure 7E

Figure 7F

**Figure 7G**

EP 1 668 886 B1

**Figure 8**

800 Adjust
Correction Map
filter based on
Apperture

326
Extract Image
Aperture
information

312
Load Aperture
data form Dust
Map

810
For Each Dust Spec in the Map

820
Calculate the size
of the focus-spill

830 create a fully
shadowed Dust
Spec

840 Create a
semi opaque
dust spec

832
For each pixel in
the fully shadowed
region

842
For each pixel in
the semi opaque
region

834
Assign
opacity=FULL

844
Calculate opacity
function value

835
Continue

841
Continue

811
Continue

**Figure 9**

900　Adjust
Dust map/ Image
Based on Focal
Length

326
Extract Image
Focal Length
and lens type

312
Load Dust
Map Focal
Length and
lens type

318
Load tw
distance of
dust

910
For Each Dust Spec in the Map

940
For each Pixel in
the Peripheral of
the Dust Spec

920
For each Pixel in
the Dust Spec

942
Load the X,Y coordinates
in relations to the Center
of the Image

922
Load the X,Y
coordinates in relations
to the Center of the
Image

944
Calculate Dust shift on the
Axis to the origin

924
Calculate Dust shift on the
Axis to the origin

941
Continue

921
Continue

911
Continue

**1010**
Acquire Image I1

**1012**
Detect Dust Map with
Regions Dn(I,j)
each centered at (i,j)

**1020**
Repeat until image with
clear dust spots is captured

**1030**
Acquire Image In
with different focal lens
parameters

**1040**
Repeat until D'n(I,j) is a clear
dust spot in Image I2

**1042**
Within (i,j) region:
correlate Dust region Dn'(I',j')
with Dust spot Dn(i,j)

**1049**
Continue

**1050**
Calculate the ratio
i/i' and j/j'

# Figure 10

1110
Acquire Image I1

1120
Detect Dust Map with
Regions Dn(I,j)
each centered at (i,j)

1130
Repeat for several apertures
and image with
clear dust spots is captured

1140
Acquire Image In
with different aperture

1150
Repeat until D'n(I,j) is a clear
dust spot in Image I2

1160
Within (i,j) region
correlate fall off in Dust region
Dn'(I',j') with Dust spot Dn(i,j)

1168
Continue

1169
Continue

1170
For each pixel (k,l) in Dust spec
Dn

1172
Calculate the ratio of D(k,l) and
Dn(k,l)

1179
Continue

1180
Determine Fall off as a
function of aperture

# Figure 11

# Figure 12

**1200**
Input:
Dust Map

**1260**
Determine the need to
perform maintenance
analysis

**1262**
No Need

**1270**
Analyze dust map

**1221**
Print/Log
analysis

**1272**
Repeat for each dust region
in dust map

**1273**
Calculate

- Area of dust region
- Maximum width of dust region
- Distance between dust region and
                    neighboring regions
- movement of dust region form last analysis
- occurrence of dust form last analysis

**1280**
If Dust-Presence
exceeds acceptable
level

**1274**
Continue

YES

**1290**
Inform user that
camera needs to
be maintained

**1285**
Inform user of
the need to
create a new
calibration
image

**1275**

Consolidate the results of each dust region for
the entire image:

Calculate:

- Overall area of dust
- Largest width of dust
- Largest area of dust spec
- changes in area of dust since last analysis
- Changes of dust particles since last analysis

ND (Non Dust)

Potentially Dust:

$$f_i(hdp) < p(Hdp)$$
$$f_i(ndp) < p(Ndp)$$

YD (Dust)

*Fig 13(a)* – after processing image "i"

ND (Non Dust)

Potentially Dust:

$$f_{i+1}(hdp) = f_i(hdp) < p(Hdp)$$
$$f_i(ndp) < f_{i+1}(ndp) < p(Ndp)$$

YD (Dust)

Potentially Dust:

$$f_i(hdp) < f_{i+1}(hdp) < p(Hdp)$$
$$f_{i+1}(ndp) = f_i(ndp) < p(Ndp)$$

*Fig 13(b)* – after processing image "i+1"

ND (Non Dust):

$$f_{i+2}(ndp) > p(Ndp) > f_{i+1}(ndp)$$

YD (Dust):

$$f_{i+2}(hdp) > p(Hdp) > f_{i+1}(hdp)$$

*Fig 13(c)* – after processing image "i+2"

pM

WHITE

DUST
REGION

dM

YES (Dust)

MAYBE

**Fig 14(a)**

**Fig 14(b)**

I-dM

WHITE

MAY BE DUST          DON'T KNOW

I-pM

DUST

MAY BE DUST

**Fig 14(c)**

**Fig 14(d)**

WHITE

dM'

DUST

SUBTRACT
QUANTA

pM'

YES
(Dust)

**Fig 14(e)**

**Fig 14(f)**

**EP 1 668 886 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020093577 A, Kitawaki

- EP 2004008706 W